# EUROPÄISCHE PATENTSCHRIFT

(11) **EP 2 788 146 B1**
(45) Veröffentlichungstag und Bekanntmachung des Hinweises auf die Patenterteilung: **16.11.2016**
(21) Anmeldenummer: 12801531.0
(22) Anmeldetag: 07.12.2012
(51) Int. Cl.: B23Q 3/155, B23Q 3/157

(54) **SYSTEM UND VERFAHREN ZUM BEREITSTELLEN VON WERKZEUGEN AN EINER WERKZEUGMASCHINE, SOWIE WERKZEUGMASCHINE MIT EINEM WERKZEUGWECHSELSYSTEM**
SYSTEM AND METHOD FOR PROVIDING TOOLS ON A MACHINE TOOL, AND MACHINE TOOL HAVING A TOOL CHANGING SYSTEM
SYSTÈME ET PROCÉDÉ POUR FOURNIR DES OUTILS À UNE MACHINE-OUTIL, ET MACHINE-OUTIL POURVUE D'UN SYSTÈME DE CHANGEMENT D'OUTIL

(30) Priorität: 08.12.2011 DE 102011088055
(43) Veröffentlichungstag der Anmeldung: 15.10.2014
(73) Patentinhaber: DECKEL MAHO Pfronten GmbH, 87459 Pfronten (DE)
(72) Erfinder: KRAFT, Oliver, 87459 Pfronten (DE); RIEDEL, Sebastian, 87637 Eisenberg (DE); TRENKLE, Michael, 87459 Pfronten (DE)
(74) Vertreter: MERH-IP Matias Erny Reichl Hoffmann Patentanwälte PartG mbB
(86) Internationale Anmeldenummer: PCT/EP2012/074746
(87) Internationale Veröffentlichungsnummer: WO 2013/083756

(56) Entgegenhaltungen:
- EP-A1- 0 266 647
- WO-A1-88/00510
- DE-A1- 3 440 356
- DE-A1- 4 033 036
- DE-A1- 10 236 342
- DE-U1-202006 009 974
- FR-A1- 2 347 155
- JP-A- 56 157 934

## Beschreibung

Die vorliegende Erfindung betrifft ein System und ein Verfahren zum Bereitstellen von Werkzeugen an einer Werkzeugmaschine, sowie eine Werkzeugmaschine zum Bearbeiten eines Werkstücks mit einem Werkzeugwechselsystem.

### Hintergrund der Erfindung

Systeme zum Bereitstellen von Werkzeugen an einer Werkzeugmaschine und Werkzeugmagazine zur Werkzeugbevorratung einer Werkzeugmaschine sind aus dem Stand der Technik in unterschiedlichen Ausführungsformen bekannt. Werkzeugwechselsysteme werden beispielsweise in Fräsbearbeitungszentren eingesetzt, um die Nebenzeiten der jeweiligen Bearbeitungsmaschine, beispielsweise die sogenannten Span-zu-Span-Zeiten, zu verringern.

Mit Hilfe derartiger Werkzeugwechselsysteme werden Werkzeuge bei Bedarf aus dem Werkzeugmagazin in eine Bearbeitungsspindel einer Werkzeugmaschine bzw. von dieser zurück ins Werkzeugmagazin gewechselt. Dies geschieht gegebenenfalls vollautomatisiert und programmgesteuert.

Moderne Werkzeugmagazine für Werkzeugmaschinen nehmen hierzu eine Mehrzahl von Werkzeugen zur Werkzeugbevorratung auf und stellen diese der Maschine bereit, wenn diese ein Werkzeug für den nächsten Arbeitsgang benötigt oder nehmen ein bereits benutztes Werkzeug von der Maschine zur Ablage auf. Hierbei sind aus dem Stand der Technik insbesondere zwei grundlegende Typen von Werkzeugmagazinen bekannt, die sich darin unterscheiden, dass entweder die Werkzeuge in einer ortsfesten, unbeweglichen Werkzeugaufnahme gelagert sind und ein beweglicher Manipulator zur Lagerposition des Werkzeugs fährt, um dort das Werkzeug mittels einer Entnahmeeinrichtung zu entnehmen, oder dass das Aufnahmemittel zum Lagern bzw. Aufnehmen der Werkzeuge zu einer vorbestimmten Entnahmeposition verfahren wird, an der das gewünschte Werkzeug von der Entnahmeeinrichtung des ortsfesten Manipulators entnommen wird.

Beispielsweise sind aus dem Stand der Technik Kettenmagazine für Werkzeugmaschinen mit starrem Manipulator z.B. aus der DE 39 05 780 C1 und der DE 10 2005 052353 A1 bekannt. Weiterhin sind aus dem Stand der Technik Regalmagazine mit starren Aufnahmemitteln und einer zum Entnehmen der Werkzeuge steuerbaren Entnahmeeinrichtung, z.B. aus der DE 10 334 346 A1, bekannt, die in der Regel eine höhere Werkzeugspeicherkapazität bei im Vergleich zu Kettenmagazinen kompakteren Aufstellfläche aufweisen. Weiterhin ist in der DE 10 2009 008 647 A1 ein Werkzeugwechselsystem beschrieben, bei dem die Werkzeuge innerhalb des Werkzeugmagazins auf verschiedenen Ebenen in Aufnahmefächern gelagert sind, die entlang eines Kreisbogens angeordnet sind.

Zur Verkürzung der Produktionszeiten ist es vorteilhaft sämtliche Bereitstellungs- und Ablegevorgänge in möglichst kurzer Zeit zu bewerkstelligen. Dadurch werden die Nebenzeiten einer Bearbeitung, d.h. die Zeiten, in denen am Werkstück zwar mittelbare Fortschritte im Sinne des Auftrags, aber keine Formänderung bewirkt wird, reduziert und es kann wirtschaftlicher gefertigt werden. Bei den vorgenannten Werkzeugmagazinen kann es jedoch oftmals nicht vermieden werden, dass während der Werkzeugbereitstellung oder dem Umsortieren der Werkzeuge die Werkzeugmaschine den am Werkstück ausgeführten Bearbeitungsschritt bereits beendet hat und das nächste Werkzeug benötigt. Sind die Bereitstellungszeiten des Werkzeugmagazins zu groß, kommt es zu Wartezeiten der Maschinenspindel und damit zu Verlust in den Nebenzeiten. Weiterhin ist es nachteilig, dass beim Nachrüsten eines Werkzeugmagazins an einer Rüststation keine Werkzeugbereitstellung stattfinden kann und derartige Rüstvorgänge zu einem Verlust von Nebenzeiten führt.

Die Anzahl erforderlicher Rüstvorgänge am Werkzeugmagazin kann zwar durch eine Erhöhung der Werkzeugspeicherkapazität des Werkzeugmagazins, d.h. die Anzahl der zur Verfügung stehender Werkzeuglagerplätze, reduziert werden. Magazine mit vielen Werkzeugplätzen benötigen jedoch in der Regel einen größeren Aufstellraum, der insbesondere in unmittelbarer Nähe der Werkzeugspindel oftmals begrenzt ist. Mit der Größe des Werkzeugmagazins erhöhen sich zudem wiederum die durchschnittlichen Werkzeugbereitstellungszeiten.

Aus der DE 101 63 294 A1 ist zudem ein Werkzeugwechselsystem bekannt, das ein Werkzeugmagazin und einen Werkzeugwechsler umfasst, der als Zwischenspeicher ausgebildet ist. Jedoch ist auch dieses System hinsichtlich der Werkzeugtransportkapazität eingeschränkt.

WO 88/00510 A1 beschreibt eine Werkzeugwechselvorrichtung an einer Werkzeugmaschine, die eine drehbare Arbeitsspindel einen wenigstens in einer parallel zur Arbeitsspindel gerichteten Maschinenachse verschiebbaren Ständer, einen vertikal am Ständer verschiebbaren Spindelstock und ein horizontal angeordnetes Werkzeugmagazin mit einer die Aufnahmeplätze für Werkzeuge bildenden Kette aufweist. Dabei ist ein Wechsler, mittels dessen die Übergabe von Werkzeugen zwischen dem Werkzeugmagazin und der Arbeitsspindel sowie umgekehrt erfolgt, zumindest zeitweilig unabhängig vom Spindelstock am Ständer vertikal bewegbar. Die Kette des Werkzeugmagazins ist den Bewegungen des Ständers in Richtung der genannten Maschinenachse nachführbar.

JP 56 157934 A beschreibt eine automatische Werkzeugwechselvorrichtung zwischen einer Maschinenhauptachse eines Maschinenhauptkörpers und eines Werkzeugmagazins auf einer Basis. Ein zweites Werkzeugmagazin ist dem Werkzeugmagazin benachbart, mit einer zweiten automatischen Werkzeugwechseleinrichtung dazwischen. Durch die Vorrichtung wird ein Werkzeug zwischen der Hauptachse und dem Magazin transportiert.

DE 40 33 036 A1 beschreibt eine Werkzeugmaschine mit Hintergrundmagazin mit einem horizontalverfahrbaren Ständer mit einer daran vertikal verfahrbaren Arbeitsspindel, die über einen Werkzeugwechsler mit Werkzeugen versorgt werden kann. Mit diesem spindelseitigen Werkzeugwechsler wirkt zumindest ein bis zur Rückseite des Ständers verfahrbarer Werkzeughalter zusammen, der in einer rückwärtigen Wechselposition eine magazinseitige Werkzeugtransportvorrichtung anfährt, die einen Werkzeuglift hat, der bis zur rückwärtigen Wechselposition des ständerseitigen Werkzeughalters verfahrbar und an dieser Wechselposition zumindest in Richtung einer der Maschinenachsen, der X-Richtung, mit dem Ständer mitführbar ist. Um die Flexibilität des Werkzeugtransportsystems zu erhöhen, ist der magazinseitige Werkzeuglift in der Wechselposition zusätzlich zumindest in einer zweiten Maschinenachse mit dem Ständer mitgeführt.

DE 102 36 342 A1 beschreibt ein Verfahren zum Bestücken von Werkzeugen in Werkzeugmagazinen, wobei beim Bestücken von Werkzeugen in den Werkzeugmagazinen die Werkzeuge aus einer Bestückungsstation mit einem Werkzeugwechsler in eine Übergabeposition im Werkzeugmagazin transportiert werden. Damit eine Bestückung ohne Unterbrechung des Bearbeitungsprozesses möglich ist, erfolgt der Transport des Werkzeuges während wenigstens eines Zeitfensters hauptzeitparallel. Die Übergabe des Werkzeuges von der Bestückungseinrichtung an das Werkzeugmagazin erfolgt mit einer Transportrichtung. Die Bestückung ist somit während des Bearbeitungsprozesses gewährleistet, indem während eines Zeitfensters das Werkzeug aus der Bestückungsposition in eine Übergabeposition und umgekehrt transportiert wird.

EP 0 266 647 A1 beschreibt eine Lager- und Transporteinheit, die sich im Wesentlichen aus einem Rahmengestell und im Rahmengestell gelagerten Werkzeugmagazinen zusammensetzt. Die Werkzeugmagazine sind längliche Gehäuse, in denen Werkzeuge formschlüssig gehaltert sind. Die Werkzeugmagazine sind mit Fahrwerken ausgerüstet, die auf im Rahmengestell befestigte Fahrbahnen abgestützt und fixiert sind.

### Zusammenfassung der Erfindung

Eine Aufgabe der Erfindung ist es somit, ein System und ein Verfahren zum Bereitstellen von Werkzeugen an einer Werkzeugmaschine, sowie eine Werkzeugmaschine zum Bearbeiten eines Werkstücks mit einem Werkzeugwechselsystem bereitzustellen, bei denen die vorstehend genannten Probleme der aus dem Stand der Technik bekannten Werkzeugmagazine gelöst werden.

Insbesondere ist es eine weitere Aufgabe der Erfindung, ein System und ein Verfahren zum Zuführen und Wechseln von Werkzeugen an einer Werkzeugmaschine bereitzustellen, das lange Nebenzeiten vermeidet und sich durch eine erhöhte Handhabungsgeschwindigkeit der Werkzeuge auszeichnet.

Die vorstehend beschriebenen Aufgaben werden erfindungsgemäß gelöst durch ein System zum Bereitstellen von Werkzeugen an einer Werkzeugmaschine nach Anspruch 1, eine Werkzeugmaschine mit einer Werkzeugwechseleinrichtung nach Anspruch 14 und ein Verfahren zum Bereitstellen von Werkzeugen nach Anspruch 15. Bevorzugte Ausführungsbeispiele der Erfindung werden in den abhängigen Ansprüchen beschrieben.

Ein System zum Bereitstellen von Werkzeugen an einer Werkzeugmaschine nach der vorliegenden Erfindung umfasst ein erstes Werkzeugmagazin zur Aufnahme einer Mehrzahl von Werkzeugen und eine erste Zufuhreinrichtung, die dazu eingerichtet ist, Werkzeuge aus dem ersten Werkzeugmagazin zu entnehmen und der Werkzeugmaschine zuzuführen, indem die Werkzeuge nach der Entnahme aus dem Magazin verfahren und der Spindel zugeführt werden. Das System umfasst weiterhin mindestens ein zweites Werkzeugmagazin zur Aufnahme einer Mehrzahl von Werkzeugen und eine Übergabevorrichtung, die eingerichtet ist, dem zweiten Werkzeugmagazin entnommene Werkzeuge dem ersten Werkzeugmagazin zuzuführen, so dass das zweite Werkzeugmagazin als Zuliefermagazin für das erste Werkzeugmagazin dient.

Durch die erfindungsgemäße Kombination aus einem ersten Hauptmagazin und mindestens einem zweiten Zuliefermagazin, das das erste Magazin mit Werkzeugen versorgen kann, kann die Bestückung der beiden Werkzeugmagazine im laufenden Betrieb jeweils optimal auf die Bearbeitungsvorgänge der Werkzeugspindel angepasst werden. Dies ermöglicht eine platzsparende, kompakte Bauweise des ersten Werkzeugmagazins, das dadurch nahe an der zu bestückenden Werkzeugspindel positioniert werden kann und kurze Zustellwege beim Werkzeugwechsel ermöglicht. Im ersten Werkzeugmagazin nicht gelagerte Werkzeuge können bei Bedarf flexibel aus dem zweiten Werkzeugmagazin nachgeliefert werden.

Vorzugsweise umfasst die erste Zufuhreinrichtung auch einen Werkzeugwechsler, der der Arbeitsspindel Werkzeuge entnimmt und andere Werkzeuge in die Arbeitsspindel einsetzt.

Vorzugsweise umfasst das System weiterhin eine zweite Zufuhreinrichtung, die dazu eingerichtet ist, Werkzeuge aus dem zweiten Werkzeugmagazin zu entnehmen und an einer vorbestimmten Übergabeposition bereitzustellen.

Vorzugsweise sind das erste und das zweite Werkzeugmagazin derart ausgebildet, dass sie unabhängig voneinander und gegebenenfalls zeitlich parallel betrieben werden, wobei die erste Zufuhreinrichtung Werkzeuge aus dem ersten Werkzeugmagazin der Werkzeugmaschine zu- und/oder rückführen kann, während beispielsweise die zweite Zufuhreinrichtung ein Werkzeug an der vorbestimmten Übergabeposition bereitstellt oder ein vom erstem Werkzeugmagazin zugeführtes Werkzeug im zweiten Werkzeugmagazin ablegt. Gemäß einer vorteilhaften Ausgestaltungsform ist es auch möglich, dass die Übergabevorrichtung Werkzeuge aus dem zweiten Werkzeugmagazin in das erste Werkzeugmagazin transportiert und/oder zurück, während die erste Zufuhreinrichtung Werkzeuge aus dem ersten Werkzeugmagazin der Spindel zuführt. Zudem kann parallel ein Rüstvorgang oder ein Werkzeugbereitstellungsvorgang am zweiten Werkzeugmagazin durchgeführt werden. Durch ein derartiges Entkoppeln der Funktionsweise des ersten und zweiten Werkzeugmagazins können Stillstandszeiten der Werkzeugspindel durch Nach- bzw. Umrüsten der Werkzeuge im Werkzeugmagazin vermieden werden, so dass eine Reduzierung der Nebenzeiten erzielt wird.

Zudem kann die Handlingsgeschwindigkeit (Handhabungsgeschwindigkeit) der Werkzeuge, insbesondere die Zahl der pro Zeiteinheit bewegten Werkzeuge, gegenüber Systemen des Stands der Technik entscheidend erhöht werden.

Es ist ein weiterer Vorteil der Erfindung, dass die Kombination zweier Werkzeugmagazine die Möglichkeit eröffnet, die Werkzeugbruchüberwachung, die Kegelreinigung, oder die Werkzeug-Identifikation wahlweise sowohl im ersten oder im zweiten Werkzeugmagazin durchzuführen. Vorzugsweise ist das zweite Werkzeugmagazin eingerichtet, die Werkzeugbruchüberwachung, die Kegelreinigung, oder die Werkzeug-Identifikation durchzuführen, so dass diese beispielsweise gleichzeitig zu einem vom ersten Werkzeugmagazin durchgeführten Werkzeugwechsel an der Spindel stattfinden können, um die Nebenzeiten weiter zu reduzieren.

Die Begriffe "Zufuhreinrichtung" und "Übergabevorrichtung" im Sinne der Erfindung sind dabei funktionsbezogen zu verstehen. Vorteilhafterweise sind die Übergabevorrichtung und die erste Zufuhreinrichtung konstruktiv als eine Baueinheit ausgebildet, mittels derer Werkzeuge zwischen dem ersten Werkzeugmagazin und der Spindel verfahren werden und mittels derer Werkzeuge zwischen dem ersten Werkzeugmagazin und dem zweiten Werkzeugmagazin verfahren werden. Vorzugsweise nimmt die Übergabevorrichtung hierbei an einer vorbestimmten Übergabeposition durch die zweite Zufuhreinrichtung bereitgestellte Werkzeuge auf oder die Übergabevorrichtung stellt an einer vorbestimmten Übergabeposition aus dem ersten Werkzeugmagazin entnommene Werkzeuge der zweiten Zufuhreinrichtung bereit. Mit anderen Worten wird in diesem Fall die erste Zufuhreinrichtung als Übergabevorrichtung eingesetzt, um Werkzeuge aus dem zweiten Werkzeugmagazin dem ersten Werkzeugmagazin zuzuführen bzw. um Werkzeuge aus dem ersten Werkzeugmagazin in das zweite zurückzulegen. Gemäß dieser Ausführungsform hat die erste Zufuhreinrichtung eine Doppelfunktion, um das Bereitstellen einer separaten Übergabevorrichtung zu vermeiden: Sie führt den Werkzeugwechsel an der Spindel aus und optimiert die Werkzeugbestückung der beiden Werkzeugmagazine derart, dass die aufgrund der vorbestimmten Bearbeitungsschritte am Werkstück benötigten Werkzeuge zeitnah im ersten Werkzeugmagazin bereitgestellt werden. Vorzugsweise ist die erste Zufuhreinrichtung eingerichtet, Werkzeuge zwischen dem ersten und zweiten Werkzeugmagazin auszutauschen, während das Werkstück an der Spindel bearbeitet wird, so dass die Nebenzeiten weiter reduziert werden können.

Es ist jedoch ebenfalls möglich, als Übergabevorrichtung eine zusätzliche Zufuhreinrichtung einzusetzen, die eingerichtet ist, im zweiten Werkzeugmagazin gelagerte Werkzeuge dem ersten Magazin zuzuführen und umgekehrt.

Es ist weiterhin möglich, dass die Übergabevorrichtung und die zweite Zufuhreinrichtung als eine Baueinheit ausgebildet sind, mittels derer Werkzeuge aus Lagerplätzen des zweiten Werkzeugmagazins entnommen und zwischen dem zweiten Werkzeugmagazin und dem ersten Werkzeugmagazin verfahren werden, um Werkzeuge zwischen dem zweiten Werkzeugmagazin und dem ersten Werkzeugmagazin auszutauschen.

Ein weiterer Vorzug der Erfindung liegt darin, dass die Übergabevorrichtung auch eingerichtet sein kann, Werkzeuge von dem zweiten Werkzeugmagazin direkt der Werkzeugmaschine zuzuführen. Die Möglichkeit, Werkzeuge aus dem zweiten Werkzeugmagazin wahlweise direkt der Maschinenspindel oder zuerst dem ersten Werkzeugmagazin zur Zwischenlagerung zuzuführen, erhöht die Flexibilität bei der Werkzeugbereitstellung, so dass "ein Flaschenhals" am ersten Werkzeugmagazin vermieden wird und abhängig von Produktionsablauf und benötigter Werkzeugreihenfolge diejenige Werkzeugbereitstellungsstrategie gewählt werden kann, die den optimalsten Produktionsablauf ermöglicht. Falls die Übergabevorrichtung und die zweite Zufuhreinrichtung als eine Baueinheit ausgebildet sind, kann vorteilhafterweise die Zufuhreinrichtung des zweiten Werkzeugmagazins, beispielsweise der Manipulator eines Matrixmagazins, auch eingerichtet sein, Werkzeuge aus dem zweiten Werkzeugmagazin wahlweise direkt der Maschinenspindel oder dem ersten Werkzeugmagazin zur Zwischenlagerung zuzuführen.

Es ist besonders vorteilhaft, wenn die Übergabevorrichtung eingerichtet ist, durch Austausch von Werkzeugen zwischen dem ersten und zweiten Werkzeugmagazin die Bestückung der beiden Werkzeugmagazine so zu optimieren, dass jeweils die für die nächsten n Bearbeitungsschritte (n≥1) an der Spindel benötigten Werkzeuge im ersten Werkzeugmagazin vorrätig sind. Der Wert für n kann je nach Typ und Speicherkapazität des Werkzeugmagazins beispielsweise derart festgelegt werden, dass während der nächsten n Bearbeitungsschritte am Werkstück auch ein Rüstvorgang des zweiten Werkzeugmagazins durchgeführt werden kann. Dies hat den Vorteil, dass auch während eines Rüstvorgangs am Zuliefermagazin, während dessen kein Werkzeugaustausch mit dem ersten Werkzeugmagazin möglich ist, keine Verluste in den Nebenzeiten entstehen. Dadurch entstehen keine Wartezeiten an der Werkzeugspindel, da alle für die nächsten n Bearbeitungsschritte erforderlichen Werkzeuge im ersten Werkzeugmagazin vorrätig sind.

Bei einer vorteilhaften Ausgestaltungsform verfügt das zweite Werkzeugmagazin über eine höhere Werkzeugspeicherkapazität, d.h. Anzahl an Lagerplätzen zur Aufnahme von Werkzeugen, als das erste Werkzeugmagazin. Vorzugsweise beträgt die Anzahl der Lagerplätze in dem ersten Werkzeugmagazin mehr als vier, vorzugsweise mehr als acht. Vorzugsweise beträgt die Anzahl der Lagerplätze in dem zweiten Werkzeugmagazin mehr als 20, vorzugsweise mehr als 40. So kann das erste Werkzeugmagazin mit kompakterem Stellraum als das zweite Werkzeugmagazin realisiert und möglichst nahe in dem oftmals begrenzten Produktionsraum vor der Werkzeugspindel positioniert werden. Das größere, zweite Werkzeugmagazin, das mittels der Übergabevorrichtung mit dem ersten Werkzeugmagazin gekoppelt ist, kann dann etwas weiter entfernt von der Werkzeugspindel, vorzugsweise in Nähe des ersten Werkzeugmagazins, aufgestellt werden. Dies ermöglicht eine effizientere Raumausnutzung und höhere Flexibilität bei der Aufstellung des Werkzeugwechselsystems, bei gleichzeitig hoher Gesamtwerkzeugspeicherkapazität des Systems und kurzen Zustellwegen beim Werkzeugwechsel an der Spindel.

Bei einer weiteren vorteilhaften Ausgestaltungsform ist die durchschnittliche Werkzeugbereitstellungszeit des ersten Werkzeugmagazins kürzer als die des zweiten Magazins. Unter durchschnittlicher Werkzeugbereitstellungszeit wird die durchschnittliche Zeitdauer verstanden, die benötigt wird, um ein Werkzeug aus einem Lagerplatz des Werkzeugmagazins zu entnehmen und einer vorbestimmten Übergabeposition an der Spindel, bevorzugterweise die Spindelaufnahmeposition, zuzuführen. Durch die Kombination eines schnellen ersten Werkzeugmagazins und eines langsameren zweiten Werkzeugmagazins, das dafür vorzugsweise eine höhere Werkzeuglagerkapazität aufweist, werden die Nebenzeiten des Werkzeugwechselsystems möglichst gering gehalten. So kann beispielsweise das erste Werkzeugmagazin als Schnellzugriffsmagazin und das zweite Werkzeugmagazin als Hintergrundmagazin genutzt werden. Die Vorteile der Erfindung können in besonderem Maße realisiert werden, wenn die Werkzeuglagerkapazität des ersten kleiner als die des zweiten Werkzeugmagazins ist und die durchschnittliche Werkzeugbereitstellungszeit des ersten kürzer als die des zweiten Werkzeugmagazins ist.

Gemäß einer weiteren vorteilhaften Ausführungsform sind Werkzeuge in einer ersten Übergabeposition, einer zweiten Übergabeposition und optional auch in einer Aufnahmeposition an der Spindel derart bereitgestellt, dass die Längsachsen der Werkzeuge in diesen Positionen in horizontaler Ausrichtung und parallel zueinander ausgerichtet sind. Dabei sind die erste bzw. zweite Übergabeposition diejenigen Werkzeugbereitstellungspositionen, an denen ein Werkzeug des ersten bzw. zweiten Werkzeugmagazins an die Zufuhrvorrichtung und/oder die Übergabevorrichtung übergeben wird. Die Längsachse der Werkzeuge kann beispielsweise mit der Kegelachse des Werkzeughohlschaftkegels oder Werkzeugsteilkegels zusammenfallen. Dies ermöglicht einen Austausch von Werkzeugen zwischen dem ersten und dem zweiten Werkzeugmagazin, sowie ein Zuführen von Werkzeugen sowohl aus dem ersten und dem zweiten Werkzeugmagazin zur Werkzeugspindel mit kurzen, schnellen Verfahrwegen. In dieser Ausführungsform können alle Verfahrwege entlang der gleichen horizontalen Linearachse, vorzugsweise mit nur einer Zufuhreinrichtung, und ohne zusätzliche Schwenkbewegungen der Werkzeuge ausgeführt werden. Vorzugsweise verbleibt die Längsachse des Werkzeugs in horizontaler Ausrichtung während einer Verfahrbewegung um das Werkzeug von der vorbestimmten Übergabeposition des zweiten Werkzeugmagazins dem ersten Werkzeugmagazin zuzuführen. Weiter vorzugsweise verbleibt die Längsachse des Werkzeugs in horizontaler Ausrichtung während einer Verfahrbewegung um das Werkzeug von dem ersten Werkzeugmagazin der Spindel zuzuführen.

In einer weiteren vorteilhaften Ausführungsform führt die Übergabevorrichtung ein im zweiten Werkzeugmagazin aufgenommenes Werkzeug dem ersten Werkzeugmagazin zu, indem es das Werkzeug auf einen vorbestimmten Übergabeplatz ablegt und das abgelegte Werkzeug zu einem späteren Zeitpunkt von dem Übergabeplatz dem ersten Werkzeugmagazin zuführt. Dadurch kann der Betrieb der beiden Werkzeugmagazine noch weiter entkoppelt werden, so dass das auf dem Übergabeplatz abgelegte Werkzeug erst bei Bedarf oder zu einem günstigen Wechselzeitpunkt in eines der beiden Werkzeugmagazine oder an den Werkzeugwechsler bzw. die Spindel übergeben wird. Vorzugsweise ist hierbei der Übergabeplatz zwischen dem ersten und dem zweiten Werkzeugmagazin angeordnet, um kurze Verfahrwege und Zustellzeiten zu erzielen. Unter einer Übergabevorrichtung kann daher auch das Zusammenwirken einer ersten Zufuhreinrichtung des ersten und einer zweiten Zufuhreinrichtung des zweiten Werkzeugmagazins verstanden werden, wobei die zweite Zufuhreinrichtung eingerichtet ist, ein im zweiten Werkzeugmagazin gelagertes Werkzeug der ersten Zufuhreinrichtung zu übergeben oder es auf einen Übergabeplatz abzulegen, damit dieser das übergebene oder abgelegte Werkzeug dem ersten Werkzeugmagazin zuführen kann.

Die erfindungsgemäße Kombination der mindestens zwei Werkzeugmagazine ist nicht auf eine besondere Form oder einen besonderen Typ der Werkzeugmagazine beschränkt.

Bevorzugt wird als ein erstes Werkzeugmagazin im Sinne der Erfindung ein Werkzeugmagazin verwendet, bei dem das Werkzeug in seiner Lagerposition im Magazin verfahren werden kann, etwa zu einer Übergabeposition zur Übergabe des Werkzeugs an die Zufuhreinrichtung und/oder Übergabevorrichtung, ohne aus dem Magazin entnommen zu werden, wie zum Beispiel ein Rad- oder Kettenmagazin.

Als zweites Werkzeugmagazin im Sinne der Erfindung wird bevorzugterweise ein Werkzeugmagazin verwendet, bei dem das Werkzeug in seiner Lagerposition ortsfest verbleibt, wie etwa ein Regal- oder Matrixmagazin, das mit einem magazineigenen Manipulator ausgestattet sein kann, der als Zufuhr- und/oder Übergabevorrichtung fungiert.

Die Vorteile der Erfindung können in besonderem Maße realisiert werden, wenn das erste Werkzeugmagazin als Radmagazin ausgebildet ist, in dem die Werkzeuge in radialer Richtung gelagert sind. Ein Radmagazin mit radial gelagerten Werkzeugen weist eine geringe Gesamtbreite und kurze Werkzeugbereitstellungszeiten auf. Dabei kann das Radmagazin vorteilhafterweise so dimensioniert sein, dass das zu entnehmende Werkzeug in der Entnahmeposition parallel und/oder in einer horizontalen Ebene mit einem in der Arbeitsspindel aufgenommenen Werkzeug angeordnet ist. Dies bringt den Vorteil mit sich, dass das Werkzeug dann von der Zufuhreinrichtung ausschließlich oder nahezu ausschließlich horizontal verfahren werden muss, um der Arbeitsspindel zugeführt zu werden.

In einer weiteren vorteilhaften Ausführungsform, die beispielsweise als Rad- oder als Kettenmagazin realisiert werden kann, sind die Werkzeuge im ersten Werkzeugmagazin in Werkzeugaufnahmen entlang des Umfangs des ersten Werkzeugmagazins derart gehaltert, dass die Längsachsen der Werkzeuge in einer Ebene liegen und vom Umfang des ersten Werkzeugmagazins abstehen, und die Werkzeuge entlang des Umfangs des ersten Werkzeugmagazins verfahren werden können. Diese Anordnung ermöglicht eine platzsparende Bauweise des ersten Werkzeugmagazins, dessen Breite im Wesentlichen durch die Breite der Werkzeuge bestimmt ist.

Die Werkzeuge werden vorzugsweise innerhalb der Ebene, in der die Längsachsen der Werkzeuge liegen, verfahren. Vorzugsweise sind die Werkzeuge an einem ersten Endbereich ihrer Längsachsen, d.h. an einem ersten Längsende, in den Werkzeugaufnahmen aufgenommen, so dass ein zweiter, gegenüberliegender Endbereich, d. h. das gegenüberliegende Längsende der Werkzeuge, nach außen oder innen absteht. In dieser Position sind die Werkzeuge verriegelt. Mit anderen Worten sind die Werkzeuge nur an einem Endpunkt am Umfang des Werkzeugmagazins gehaltert. Eine derartige Konstruktion des ersten Werkzeugmagazins ermöglicht eine besonders leichte und schmale Konstruktion des Werkzeugmagazins bei gleichzeitig hoher Werkzeugdichte und kann somit möglichst nahe an der Werkzeugspindel positioniert werden.

Um die Werkzeuge möglichst dicht am Umfang anordnen zu können, stehen die Werkzeuge vorzugsweise derart vom Umfang des ersten Werkzeugmagazins nach außen oder innen ab, dass ihre Längsachsen einen Normalenvektor zum Umfang des ersten Werkzeugmagazins bilden. Mit anderen Worten sind die Werkzeuge in Längsrichtung vorzugsweise orthogonal an der Außenumfangslinie des Werkzeugmagazins angeordnet, so dass die Längsachse der Werkzeuge senkrecht auf dem Tangentialvektor an dem Punkt steht, an dem das Werkzeug am Umfang an der Werkzeugaufnahme gehaltert ist.

Vorzugsweise stehen die Werkzeuge mit dem Längsende, das nicht am Umfang des ersten Werkzeugmagazins befestigt ist, nach außen ab. Die vom Außenumfang des Radmagazins abstehende sternförmige Anordnung der Werkzeuge bietet auch Werkzeugen, deren Werkzeugkörper einen größeren Durchmesser hat, genügend Raum und nutzt den Außenraum außerhalb des Außenumfangs des ersten Werkzeugmagazins optimal aus.

Vorzugsweise ist die erste Zufuhreinrichtung in Bezug auf das erste Werkzeugmagazin seitlich und außenseitig angeordnet. Die außenseitig angeordnete erste Zufuhreinrichtung zur Entnahme der Werkzeuge aus dem Werkzeugmagazin kann dadurch vorteilhaft entlang einer linearen Verfahrachse sowohl zwischen dem ersten Werkzeugmagazin und der Spindel der Werkzeugmaschine als auch zwischen dem ersten und dem zweiten Werkzeugmagazin verfahren werden. In Verbindung mit dem rotierbaren ersten Werkzeugmagazin, das das benötigte Werkzeug an einer vorbestimmten Entnahmeposition bereitstellen kann, ergeben sich somit kurze, einfache Zustellwege für die Zufuhreinrichtung.

Vorzugsweise ist das erste Werkzeugmagazin derart an der Werkzeugmaschine angeordnet, dass die durch die Längsachsen der Werkzeuge aufgespannte Ebene senkrecht zu einer Bodenfläche ausgerichtet ist und im Wesentlichen parallel zu einer Ebene verläuft, die durch ein Bett und einen Ständer der Werkzeugmaschine aufgespannt wird. Mit anderen Worten steht das flache Werkzeugmagazin aufrecht und kann dadurch entlang der Längsseite einer Werkzeugmaschine angeordnet werden. Dies ermöglicht eine besonders kompakte Baubreite eines Systems bestehend aus Werkzeugmaschine und dem erfindungsgemäßen Werkzeugwechselsystem, da die Breite des ersten Werkzeugmagazins nicht durch dessen Durchmesser, wie bei herkömmlichen, horizontalen Systemen, bestimmt ist, sondern im Wesentlichen durch die Werkzeugbreite, da diese in Längsrichtung in einer Ebene angeordnet und ohne Fächer oder andere sperrige Aufnahmen am Außenumfang des Werkzeugmagazins befestigt sind.

Bei einer vorteilhaften Ausgestaltungsform ist das zweite Werkzeugmagazin als Matrixmagazin oder Regalmagazin ausgebildet. Die Kombination aus Radmagazin und einem Matrix- oder Regalmagazin ist besonders vorteilhaft, da das Radmagazin schnelle Werkzeugbereitstellungszeiten bei gleichzeitig schmaler Bauweise ermöglicht und das Zuliefermagazin in Form eines Matrix- oder Regalmagazins eine hohe Werkzeugspeicherkapazität aufweist, das das Radmagazin mit den benötigten Werkzeugen versorgen kann.

Vorzugsweise ist das zweite Werkzeugmagazin derart ausgebildet, dass es satzweise und/oder hauptzeitparallel gerüstet werden kann. Beim satzweisen Rüsten kommen vorteilhafterweise Rüstkassetten zum Einsatz, so dass ein ganzer Satz von in Rüstkassetten aufbewahrter Werkzeuge in einem Wechselvorgang ausgetauscht wird. Bei dem Bestückungsvorgang werden die Werkzeuge vor oder nach dem Rüsten aus/in die Kassetten verbracht, währenddessen bei Verwendung nur eines herkömmlichen Werkzeugwechselsystems mit einem Werkzeugmagazin kein Werkzeug an der Maschine bereitgestellt werden kann. Durch die erfindungsgemäße Kombination eines ersten Werkzeugmagazins mit einem zweiten, satzweise rüstbaren Zuliefermagazin kann jedoch ein satzweiser Rüstvorgang vorgenommen werden, ohne die Bearbeitung in der Maschinenspindel unterbrechen zu müssen.

Die vorliegende Erfindung stellt zudem ein Werkzeugmagazin bereit, das derart ausgebildet ist, dass die Werkzeuge im Magazin horizontal gehaltert sind und durch eine horizontale Schubbewegung im Werkzeugmagazin abgelegt bzw. aus diesem entnommen werden können. Die horizontale Halterung vermeidet eine zusätzliche Schwenkbewegung beim Zuführen der Werkzeuge zur Spindel, wie es bei vertikal hängenden Werkzeugen erforderlich ist.

Dieses Werkzeugmagazin ist insbesondere dazu geeignet, als zweites Werkzeugmagazin in oben beschriebener Serie verwendet zu werden, ist jedoch nicht hierauf beschränkt und ergibt auch bei Verwendung als einziges Werkzeugmagazin etliche Vorteile gegenüber herkömmlichen Werkzeugmagazinen, wie aus der nachfolgenden Beschreibung deutlich wird. Insoweit stellt dieses Werkzeugmagazin einen unabhängigen Aspekt der Erfindung dar, für den gegebenenfalls auch separat Schutz begehrt werden kann. Bei einer horizontalen Lagerung in diesem erfindungsgemäßen Werkzeugmagazin, bei der die Werkzeuge durch eine horizontale Schubbewegung aus dem Werkzeugmagazin entnommen werden können, kann eine zusätzliche vertikale Hubbewegung bei der Ablage bzw. Entnahme der Werkzeuge vermieden werden, was zu einer weiteren Zeitersparnis beim Werkzeugwechselvorgang führt. Bei herkömmlichen Regalmagazinen sind die Werkzeuge in einer Art Werkzeugzange im Werkzeugmagazin gehaltert, so dass bei der Entnahme der Werkzeuge eine vertikale Hubbewegung erforderlich ist, um die Werkzeuge aus der Zange zu lösen und dann anschließend in einer horizontalen Bewegung aus der Halterung zu entnehmen.

In einer besonders vorteilhaften Ausführungsform sind die Werkzeuge im Werkzeugmagazin in einem Köcher gehaltert. Werkzeuge, deren maximaler Außendurchmesser kleiner als der Köcherinnendurchmesser ist, werden vorzugsweise in den Köcher mittels einer horizontalen Ablagebewegung eingeschoben und zur Lagerung abgelegt. Werkzeuge, deren maximaler Außendurchmesser größer als der Köcherinnendurchmesser ist, werden mittels des standardisierten Werkzeugendbereichs, beispielsweise des Hohlschaftkegels, im Köcher aufgenommen, während der gegenüberliegende Teil des Werkzeugs mit dem großen Außendurchmesser seitlich aus dem Köcher herausragt. Der Köcher schützt das Werkzeug vor Schmutz. Darüber hinaus ermöglicht er eine einfache Anpassung von beispielsweise einem Regalmagazin an bestimmte Werkzeuge, indem er eine Art Zwischenaufnahme darstellt, die bei einem Regalmagazin nachrüstbar ist und dieses zur Aufnahme weiterer Werkzeugformen erweitert.

Gemäß einer weiteren vorteilhaften Ausführungsform werden die Werkzeuge mittels einer Kugelrastung im Werkzeugmagazin gehaltert. Die Kugelrastung umfasst vorteilhafterweise eine Hohlplatte mit kreisförmiger Ausnehmung, entlang derer umfangsseitig Kugelklemmverbindungen angeordnet sind. Eine Kugelklemmverbindung umfasst eine gehärtete Stahlkugel, die durch eine oder mehrere Tellerfedern gehalten ist und mit einer Teilkugeloberfläche in die Ausnehmung hineinragt. Beim Einschub des Werkstücks in die Ausnehmung laufen die gehärteten Stahlkugeln der Kugelrastung an dem Werkstückkegel entlang, bis sie in die Greiferrille des standardisierten Werkzeugkegels einrasten und das Werkzeug in dieser Position kraft- und formschlüssig halten. Die durch Kugelklemmverbindungen gehaltenen Werkzeuge können daher mit einer horizontalen Greiferbewegung entnommen werden. Das Einsparen einer zusätzlichen vertikalen Hubbewegung bei der Entnahme bzw. der Ablage des Werkzeugs ermöglicht eine kompaktere Anordnungsdichte der Werkzeuge im Magazin, da der Platz, der vormals für die Hubbewegung benötigt wurde, nun eingespart werden kann.

Nach einem weiteren Aspekt betrifft die Erfindung ein System zum Bereitstellen von Werkzeugen an einer Werkzeugmaschine mit einer Spindel. Das System umfasst ein erstes Werkzeugmagazin zur Aufnahme einer Mehrzahl von Werkzeugen; eine erste Zufuhreinrichtung, die dazu eingerichtet ist, Werkzeuge aus dem ersten Werkzeugmagazin zu entnehmen und der Spindel zuzuführen; mindestens ein zweites Werkzeugmagazin zur Aufnahme einer Mehrzahl von Werkzeugen; und eine Übergabevorrichtung, die sowohl dazu eingerichtet ist, dem zweiten Werkzeugmagazin entnommene Werkzeuge dem ersten Werkzeugmagazin zuzuführen, so dass das zweite Werkzeugmagazin als Zuliefermagazin für das erste Werkzeugmagazin dient, als auch dazu eingerichtet ist, dem zweiten Werkzeugmagazin entnommene Werkzeuge direkt der Spindel zuzuführen. Die Doppelfunktion der Übergabevorrichtung, die Werkzeuge auch direkt von dem zweiten Werkzeugmagazin der Spindel zuführen kann, verhindert somit zuverlässig einen Flaschenhals am ersten Werkzeugmagazin. Vorzugsweise sind die erste Zufuhreinrichtung und die Übergabevorrichtung als bauliche Einheit ausgebildet.

Gemäß einer weiteren Ausführungsform sind die Zufuhreinrichtung des ersten und des zweiten Werkzeugmagazins und die Übergabevorrichtung als bauliche Einheit ausgebildet. Damit können mittels nur einer Zufuhreinrichtung Werkzeuge sowohl aus den Lagerplätzen des ersten und des zweiten Werkzeugmagazins direkt entnommen werden und dann wahlweise direkt der Spindel oder dem anderen Werkzeugmagazin zugeführt werden. Selbstverständlich kann das System auch hier mit allen weiteren zuvor beschriebenen konstruktiven Merkmalen weiter vorteilhaft ausgebildet sein. So ist es beispielsweise besonders vorteilhaft, wenn das erste Werkzeugmagazin näher an der Spindel angeordnet ist als das zweite Werkzeugmagazin, und wenn eine durchschnittliche Werkzeugbereitstellungszeit des ersten Werkzeugmagazins kürzer als eine durchschnittliche Werkzeugbereitstellungszeit des zweiten Werkzeugmagazins ist, so dass ein im ersten Werkzeugmagazin gelagertes Werkzeug schneller als ein im zweiten Werkzeugmagazin gelagertes Werkzeug von seinem Lagerplatz entnommen und einer vorbestimmten Werkzeugbereitstellungsposition zugeführt werden kann.

Eine Werkzeugmaschine zum Bearbeiten eines Werkstücks nach der vorliegenden Erfindung umfasst eine Werkzeugwechseleinrichtung zum Wechseln eines Werkzeugs an der Werkzeugmaschine mit einem erfindungsgemäßen System zum Bereitstellen von Werkzeugen an der Werkzeugmaschine wie es oben beschrieben wurde. Vorteilhafterweise ist das zweite Werkzeugmagazin derart an dem ersten Werkzeugmagazin angeordnet, dass der Verfahrweg des Werkzeugs von dem ersten Werkzeugmagazin zur Maschinenspindel kleiner als der Verfahrweg des Werkzeugs von dem zweiten Werkzeugmagazins zur Maschinenspindel ist. Mit anderen Worten ist der Abstand des zweiten Werkzeugmagazins zur Werkzeugspindel größer als der Abstand des ersten Werkzeugmagazins zur Werkzeugspindel. Unter Abstand eines Werkzeugmagazins zur Werkzeugspindel wird der durchschnittliche Verfahrweg eines Werkzeugs des Werkzeugmagazins zur Werkzeugspindel verstanden.

Die Erfindung betrifft weiterhin ein Verfahren zum Bereitstellen von Werkzeugen an einer Werkzeugmaschine, bei dem Werkzeuge aus mindestens zwei verschiedenen Werkzeugmagazinen einer Werkzeugmaschine zugeführt werden. Das Verfahren umfasst folgende Schritte: Bereitstellen einer Mehrzahl von Werkzeugen in einem ersten Werkzeugmagazin; Bereitstellen einer Mehrzahl von Werkzeugen in mindestens einem zweiten Werkzeugmagazin; Verfahren und Zuführen der Werkzeuge aus den mindestens zwei verschiedenen Werkzeugmagazinen zu der Werkzeugmaschine mittels einer Übergabevorrichtung und/oder einer Zufuhreinrichtung, wobei ein im zweiten Werkzeugmagazin gelagertes Werkzeug, das an einem vorbestimmten Werkzeugwechselzeitpunkt an der Werkzeugmaschine benötigt wird, vor dem vorbestimmten Werkzeugwechselzeitpunkt in einem ersten Schritt von der Übergabevorrichtung dem ersten Werkzeugmagazin zugeführt und in einem zweiten Schritt aus dem ersten Werkzeugmagazin mittels Zufuhreinrichtung entnommen, verfahren und der Werkzeugmaschine zugeführt wird.

### Kurze Beschreibung der Figuren

- Fig. 1: zeigt ein System zum Bereitstellen von Werkzeugen nach einem Ausführungsbeispiel der vorliegenden Erfindung in einer Vorderansicht;
- Fig. 2: zeigt ein System zum Bereitstellen von Werkzeugen nach einem Ausführungsbeispiel der vorliegenden Erfindung in einer Draufsicht;
- Fig. 3: zeigt ein System zum Bereitstellen von Werkzeugen nach einem Ausführungsbeispiel der vorliegenden Erfindung in einer Seitenansicht;
- Fig. 4: zeigt ein Ausführungsbeispiel des ersten Werkzeugmagazins, das seitlich an einer Werkzeugmaschine angeordnet ist, in einer perspektivischen Ansicht;
- Fig. 5A und 5B: zeigen ein schematisches Ablaufdiagramm eines Verfahrens zum Bereitstellen von Werkzeugen an einer Werkzeugmaschine gemäß einem Ausführungsbeispiel der Erfindung;
- Fig. 6: zeigt eine perspektivische Ansicht eines Matrixmagazins mit Köchern gemäß einem Ausführungsbeispiel der Erfindung;
- Fig. 7: zeigt eine perspektivische Ansicht eines Werkzeugköchers gemäß einem Ausführungsbeispiel der Erfindung;
- Fig. 8A und 8B: zeigen eine Vorderansicht und eine Seitenansicht einer Werkzeughalterung mit Kugelrastung;
- Fig. 9A und 9B: zeigen eine Seitenansicht und eine Vorderansicht eines Werkzeugköchers gemäß einem Ausführungsbeispiel der Erfindung; und
- Fig. 10 und 11: zeigen weitere Ausführungsbeispiele der Erfindung.

### Detaillierte Beschreibung der Figuren und bevorzugte Ausführungsbeispiele der vorliegenden Erfindung

Bevorzugte Ausführungsformen der vorliegenden Erfindung werden im Folgenden beispielsweise und exemplarisch unter Bezugnahme auf die beigefügten Zeichnungen näher beschrieben.

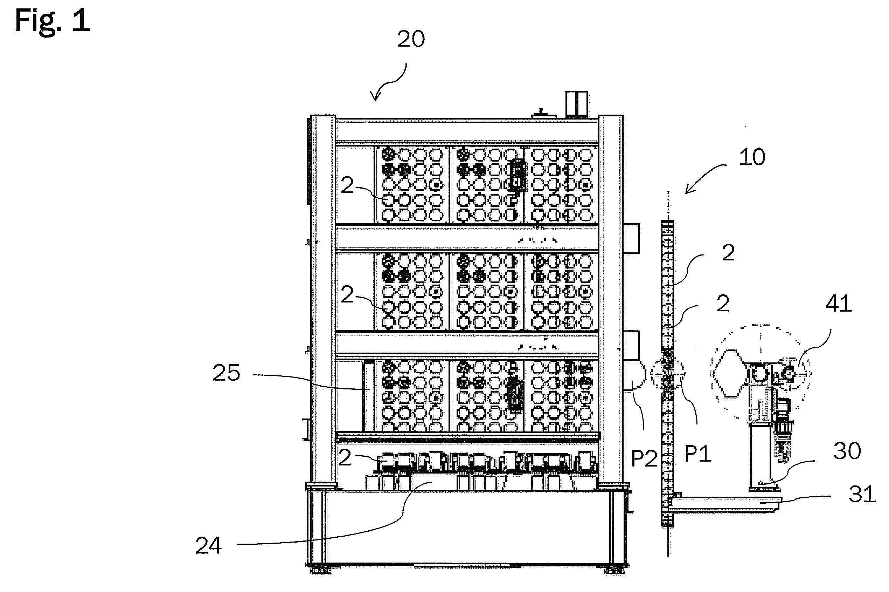

Fig. 1 zeigt eine Vorderansicht einer Ausführungsform des erfindungsgemäßen Systems zum Wechseln und Bereitstellen von Werkzeugen an einer Werkzeugmaschine, bei dem das erste Werkzeugmagazin als Radmagazin 10 und das zweite Werkzeugmagazin 20 als Matrixmagazin ausgestaltet ist. Die Werkzeugmagazine 10 und 20 lagern eine Mehrzahl von Werkzeugen 2 und stellen diese bei Bedarf der Werkzeugspindel 41 einer Werkzeugmaschine bereit, oder nehmen ein nicht mehr von der Werkzeugspindel 41 benötigtes Werkzeug 2 zur Ablage auf. Das Radmagazin 10 und das Matrixmagazin 20 können mit allen gängigen Werkzeugen 2 für die spanlose und spangebende Fertigung bestückt werden. Von der Werkzeugmaschine ist in Fig. 1 nur die Werkzeugspindel 41 zur Verdeutlichung des Erfindungsprinzips dargestellt.

Das Radmagazin 10 steht aufrecht, d.h. die Umfangslinie, entlang derer die radial angeordneten Werkzeuge durch Drehen des Radmagazins verfahren werden, spannt eine Ebene auf, die senkrecht zu der Bodenaufstandsfläche des Werkzeugmagazins 10 ausgerichtet ist. Dies ermöglicht eine besonders schmale Bauweise des ersten Werkzeugmagazins 10, da die Breite des Radmagazins 10 im Wesentlichen durch die Werkzeugbreite bestimmt ist. Dadurch kann das Radmagazin 10 nahe an der Werkzeugspindel 41 positioniert werden. Dies ermöglicht kurze Zustellwege zur Werkzeugspindel 41 und damit kurze Werkzeugwechselzeiten.

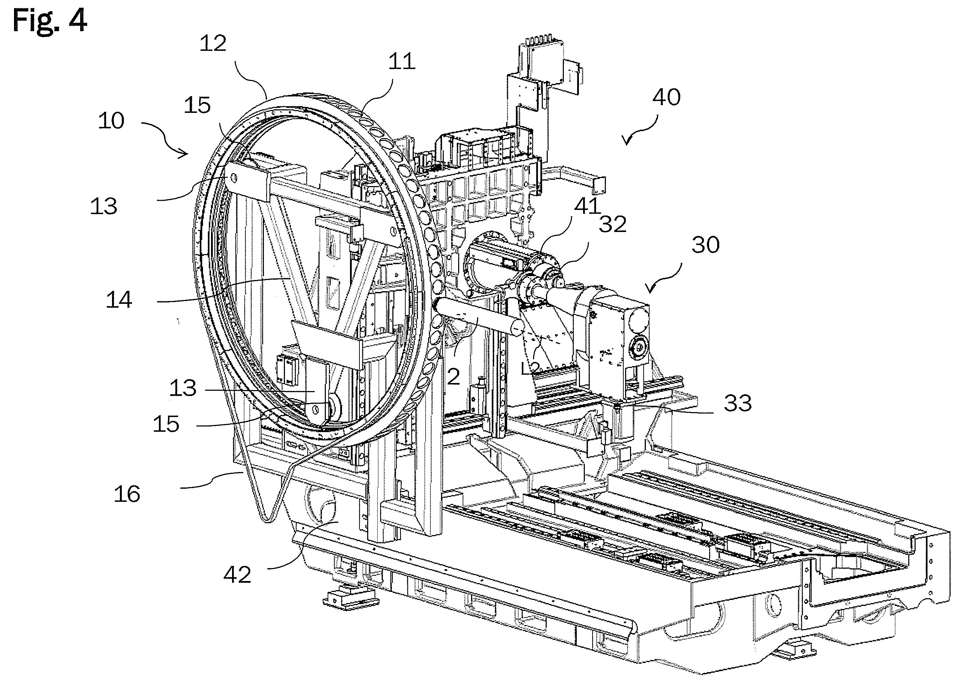

Um Werkzeuge 2 aus dem Radmagazin 10 der Werkzeugspindel 41 zuzuführen, wird das Radmagazin 10 in eine Position gedreht, bei der ein im Radmagazin 10 gelagertes und benötigtes Werkzeug 2 an einer vorbestimmten Übergabeposition P1 bereitgestellt wird. An dieser Übergabeposition P1 kann das benötigte Werkzeug 2 von einer Zufuhreinrichtung 30 mit einem Werkzeugdoppelgreifer entnommen werden. Hierzu verfährt die Zufuhreinrichtung 30 entlang einer Linearachse 31 bis zur Übergabeposition P1, entnimmt dort das Werkzeug aus dem Werkzeugmagazin 10, verfährt entlang der Linearachse zurück zur Spindel 41 und legt das Werkzeug 2 dieser zum Ausführen eines Werkzeugwechsels vor. Weitere konstruktive Details des Radmagazins 10 sind in Fig. 4 beschrieben.

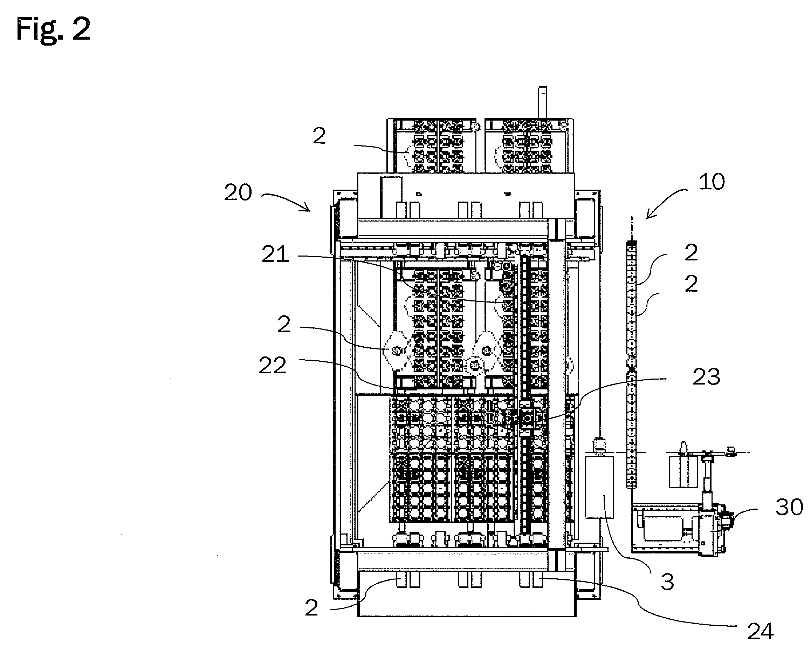

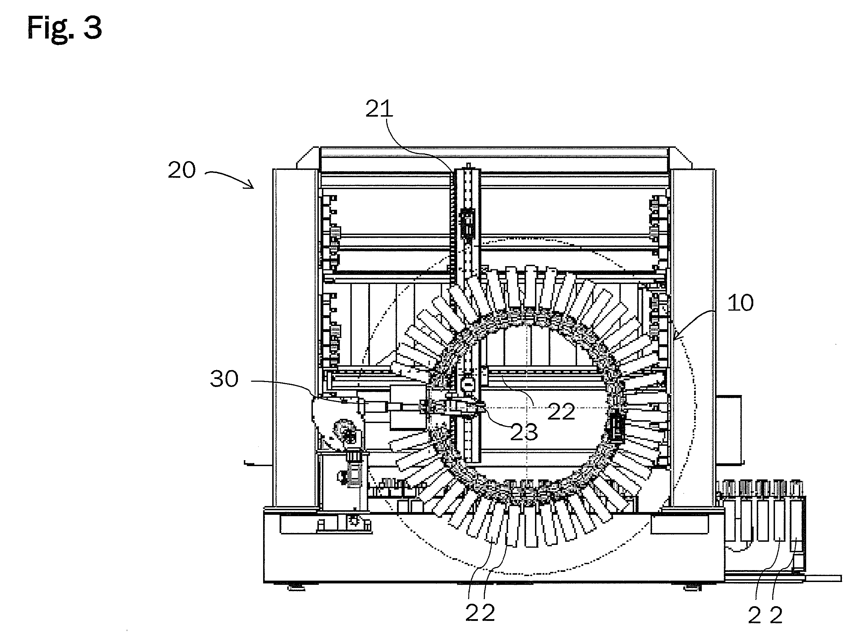

Auf der von der Werkzeugspindel 41 gegenüberliegenden Seite des Radmagazins 10 ist ein Matrixmagazin 20 als Zuliefermagazin für das Radmagazin 10 angeordnet. Der Abstand des Matrixmagazins 20 von der Spindel 41 ist somit größer als der des Radmagazins 10. In der vorliegenden Ausführungsform können in dem Matrixmagazin bis zu 500 Werkzeuge untergebracht werden. Im Vergleich zu dem Radmagazin 10, das beispielsweise je nach Bauart mit 24, 40 oder 80 Werkzeugen bestückt werden kann, ist somit die Werkzeugspeicherkapazität des Regalmagazins 20 wesentlich höher. In dem gezeigten Ausführungsbeispiel können eine vordere und eine hintere Ebene 25 des Matrixmagazins 20 jeweils mit maximal 180 Werkzeugen bestückt werden. Zusätzlich können in der unteren Ebene 24 mehrere Werkzeugkassetten mit insgesamt 140 Steckplätzen gelagert werden. Das Matrixmagazin 20 verfügt über zwei in Fig. 2 und Fig. 3 gezeigte orthogonale Linearachsen 21, 22 in Vertikal- und Horizontalrichtung, entlang derer eine zweite Zufuhreinrichtung 23 verfahrbar ist. Die zweite Zufuhreinrichtung 23 ist so ansteuerbar, dass sie die Lagerposition eines im Matrixmagazin 20 gelagerten Werkzeugs 2 anfahren kann, um dort das Werkzeug 2 aus der Lagerposition zu entnehmen und an einer vorbestimmten Übergabeposition P2 bereitzustellen. Diese Übergabeposition P2 befindet sich an dem äußeren Rand des Matrixmagazins 20, der dem Radmagazin 10 zugewandt ist.

Das in Fig. 1 gezeigte Werkzeugwechselsystem umfasst weiterhin eine Übergabevorrichtung, die eingerichtet ist, im zweiten Werkzeugmagazin 20 aufgenommene Werkzeuge 2 dem ersten Werkzeugmagazin 10 zuzuführen, so dass das zweite Werkzeugmagazin 20 als Zuliefermagazin für das erste Werkzeugmagazin 10 dient. Im vorliegenden Ausführungsbeispiel dient die Zufuhreinrichtung 30, die die Werkzeuge der Werkzeugspindel zuführt, zusätzlich auch als Übergabevorrichtung, um Werkzeuge aus dem Matrixmagazin 20 dem Radmagazin 10 zuzuführen. Hierzu ist das Matrixmagazin 20 bzw. die Übergabeposition P2 derart am ersten Werkzeugmagazin 10 positioniert, dass die Übergabeposition P2 des Matrixmagazins 20 durch Verfahren der Zufuhreinrichtung 30 entlang ihrer Linearachse 31 erreicht werden kann. Der Abstand zwischen der Übergabeposition P1 am Radmagazin 10 und der Übergabeposition P2 des Matrixmagazins 20 ist vorzugsweise möglichst klein, damit die Zustellbewegungen der Zufuhreinrichtung mittels kurzer Verfahrwege realisiert werden können.

Um ein Werkzeug aus dem zweiten Werkzeugmagazin 20 dem ersten Werkzeugmagazin 10 zuzuführen, entnimmt die zweite Zufuhreinrichtung 23 des Matrixmagazins 20 durch Verfahren entlang ihrer Linearachsen 21, 22 das benötigte Werkzeug 2 aus seiner Lagerposition im Matrixmagazin 20 und führt eine Zustellbewegung zur Übergabeposition P2 aus. Die Zufuhreinrichtung 30 verfährt zu der vorbestimmten Übergabeposition P2, an dem die zweite Zufuhreinrichtung 23 das benötigte Werkzeug 2 zur Abnahme bereithält. Die Zufuhreinrichtung 30 greift dieses Werkzeug und verfährt entlang ihrer Horizontalachse 31 zurück bis zur Übergabeposition P1 am Radmagazin 10. Währenddessen wurde das Radmagazin 10 bereits in eine Position gedreht, an der an der Übergabeposition P1 ein freier Werkzeugplatz zur Verfügung steht. In diesen freien Werkzeugplatz legt die Zufuhreinrichtung 30 das zuvor im Matrixmagazin 20 gelagerte Werkzeug 2 ab. Der Werkzeugwechsel zwischen dem ersten und zweiten Werkzeugmagazin wird vorzugsweise dann durchgeführt, wenn ein Bearbeitungsvorgang an der Maschinenspindel 41 ausgeführt wird und die Zufuhreinrichtung 30 nicht zum Werkzeugwechseln an der Spindel 41 benötigt wird.

Die Zufuhreinrichtung 30 erfüllt somit in dem vorliegenden Ausführungsbeispiel eine Doppelfunktion, indem sie sowohl eingerichtet ist, Werkzeuge aus dem Radmagazin zum Bestücken der Spindel 41 dieser zuzuführen und weiterhin Werkzeuge 2 zwischen dem ersten und zweiten Werkzeugmagazin auszutauschen.

Aufgrund der vollautomatisierten und programmgesteuerten Zuführung von Werkzeugen zu der Werkzeugspindel 41 ist die Reihenfolge der an der Werkzeugspindel 41 benötigten Werkzeuge bekannt. Die Steuerung der beiden Zufuhreinrichtungen 30, 23 erfolgt demzufolge ebenfalls vollautomatisiert und programmgesteuert. Die erste Zufuhreinrichtung 30 ist derart eingerichtet, diejenigen Werkzeuge 2, die an der Spindel 41 für die nächsten Bearbeitungsschritte benötigt werden und die nicht im Radmagazin 10, sondern im Matrixmagazin 20 gelagert sind, dem Radmagazin vor dem benötigten Werkzeugwechselzeitpunkt zuzuführen. Hierbei sind die Zustellbewegungen der zweiten Zufuhreinrichtung 23 und die Zustellbewegungen der ersten Zufuhreinrichtung 30 jeweils aufeinander abgestimmt.

Ebenso können Werkzeuge, die für die nächsten Produktionsschritte nicht benötigt werden, von dem ersten Werkzeugmagazin 10 an das zweite Werkzeugmagazin übergeben werden, um dort abgelegt zu werden. Hierzu kann in Umkehrung der Zustellbewegungen vom zweiten in das erste Werkzeugmagazin die Zufuhreinrichtung 30 Werkzeuge aus dem ersten Werkzeugmagazin 10 entnehmen und diese an der Übergabeposition P2 der Zufuhreinrichtung 23 des Matrixmagazins bereitstellen. So kann fortlaufend während des Produktionsbetriebs die Bestückung der beiden Werkzeugmagazine jeweils optimal an die Produktionsabläufe angepasst werden.

Die Kombination aus Radmagazin 10 und Matrixmagazin 20 ermöglich somit eine besonders schnelle Werkzeugbereitstellung bei reduzierten Verlusten in den Nebenzeiten. Während das nah an der Spindel 41 positionierte Radmagazin als Schnellzugriffsmagazin kurze Werkzeugbereitstellungszeiten und kurze Zustellwege zur Spindel 41 ermöglicht, können im Matrixmagazin 20 als "Hintergrundmagazin" mit hoher Werkzeugspeicherkapazität parallel und unabhängig von den Werkzeugwechselvorgängen an der Spindel 41 Werkzeuge 2 sortiert, vorbereitet und bei Bedarf dem ersten Werkzeugmagazin zugeführt werden.

Des Weiteren ist der Platzbedarf des kombinierten Werkzeugmagazins in Spindelnähe gering, da das größere Matrixmagazin mit größerem Abstand zur Spindel 41 als das Radmagazin positioniert werden kann. Weiterhin ist das Matrixmagazin 20 mit Einschubtechnik besonders geeignet, um durch satzweises Rüsten komplette Werkzeugsätze schnell aus dem Matrixmagazin 20 zu entnehmen bzw. hinzuzufügen. Das Ausführungsbeispiel aus Fig. 1 ist in Fig. 3 nochmals in einer Seitenansicht schematisch dargestellt.

Fig. 2 zeigt ein weiteres Ausführungsbeispiel eines Systems zum Bereitstellen von Werkzeugen in einer Draufsicht. Bei diesem Ausführungsbeispiel wird ein im zweiten Werkzeugmagazin 20 aufgenommenes Werkzeug dem ersten Werkzeugmagazin 10 zugeführt, indem die zweite Zufuhreinrichtung 23 des Matrixmagazins 20 eine Zustellbewegung ausführt, um das Werkzeug 2 auf einen vorbestimmten Übergabeplatz 3 mit Köcher abzulegen. Der Köcher schützt das Werkzeug vor Verschmutzung. Die Zufuhreinrichtung 30 verfährt entlang ihrer Linearachse zum Übergabeplatz 3, entnimmt von dort das abgelegte Werkzeug 2 aus dem Köcher und führt es in einer zweiten Zustellbewegung dem Radmagazin 10 zu. Der Verfahrweg vom Ablageplatz des Köchers bis zur Übergabeposition P1 am Radmagazin beträgt ca. 320mm. Der leere Köcher kann entweder auf dem Übergabeplatz 3 verbleiben oder von der Zufuhreinrichtung 23 des Matrixmagazins 20 aufgeräumt werden. Durch das Vorsehen eines Übergabeplatzes 3 wird der Betrieb der beiden Werkzeugmagazine noch unabhängiger voneinander, da beispielsweise die Zufuhreinrichtung 23 des Matrixmagazins, die ein für das erste Werkzeugmagazin bestimmtes Werkzeug entnommen hat, nicht an der Übergabeposition P2 warten muss, bis die Zufuhreinrichtung 30 ihr dieses abnimmt. Stattdessen kann die Zufuhreinrichtung des Matrixmagazins 20 nach Ablage des Werkzeugs auf dem Übergabeplatz 3 sofort weitere Bereitstellungs- oder Sortieraufgaben im Matrixmagazin 20 ausführen. Dadurch können Wartezeiten reduziert werden.

Die Zufuhreinrichtung 30 ist weiterhin eingerichtet, bei Bedarf Werkzeuge aus dem Matrixmagazin 20 direkt der Maschinenspindel 41 zuzuführen. Dies verhindert beispielsweise in Situationen, wo ein im zweiten Werkzeugmagazin 20 gelagertes Werkzeug schnell der Spindel 41 zugeführt werden muss, dass das erste Werkzeugmagazin 10 zum "Flaschenhals" wird. Derartige Situationen können beispielsweise dann auftreten, wenn eine vorbestimmte Werkstückbearbeitung durch manuelles Eingreifen einer Bedienperson geändert wird oder ein Prüfvorgang am Werkstück eine Korrekturbearbeitung des Werkstücks mittels eines anderen Werkzeugs erfordert.

Fig. 4 zeigt das als Radmagazin ausgebildete Ausführungsbeispiel des ersten Werkzeugmagazins 10 in räumlicher Darstellung. Das zweite Werkzeugmagazin ist in dieser Darstellung nicht gezeigt. In dem ringförmigen Radmagazin 10 können eine Mehrzahl von Werkzeugen zur Werkzeugbevorratung aufbewahrt werden. Hierbei werden die Werkzeuge 2 an einem ihrer Endpunkte entlang des Umfangs des Radmagazins 10 gehaltert. Hierzu befinden sich entlang des Umfangs des Radmagazins 10 Werkzeugaufnahmen 11, die eine lösbare Verbindung mit den Werkzeugen 2 eingehen können. In Fig. 4 sind die Werkzeugaufnahmen 11 als eine Ringstruktur realisiert, die löcherartige Strukturen bereitstellen, was eine besonders leichte Bauweise ermöglicht. Die Werkzeuge werden in den Aufnahmen 11 aufgrund der Flieh- und der Gravitationskraft verriegelt. Im vorliegenden Beispiel wird hierzu eine Aktivverriegelung durch Rastverbindung mit den Werkzeugen realisiert, bei der die Werkzeuge in einer formschlüssigen Verbindung zwangsverriegelt werden. Zur Befestigung der Werkzeuge 2 in den Werkzeugaufnahmen 11 wird ein selbsthaltender Hohlschaft-Kegel mit Plananlage (HSK) als Schnittstelle verwendet (in den Figuren nicht dargestellt). Alternativ kann auch ein Steilkegel oder Morsekegel eingesetzt werden. Die Werkzeuge sind somit nur an einem ihrer Längsenden am äußeren Umfang des Radmagazins befestigt, so dass die Werkzeuge in radialer Richtung vom Außenumfang des Radmagazins nach außen strahlenförmig abstehen. Dadurch liegt die Längsachse der Werkzeuge, die in Fig. 4 durch eine gestrichelte Linie L2 illustriert ist, in einer Ebene. Dadurch können die Werkzeuge äußerst kompakt und dicht entlang des Umfangs des Radmagazins 10 gegeneinander angeordnet werden.

Fig. 4 zeigt zur Verdeutlichung des Konstruktionsprinzips nur eine Bestückung mit einem Werkzeug 2. Das Radmagazin ist mittels eines Dreiecksrahmens 14 gelagert, an dessen drei Endpunkten 13 jeweils ein Laufrad 15 angeordnet ist. Neben der hier gezeigten Dreipunktlagerung ist auch eine Vier- oder Mehrpunktlagerung möglich. Anstatt des Dreiecksrahmens 14 kann das Radmagazin natürlich auch durch eine Mittelachse gelagert werden. Die Rotation des Radmagazins 10 erfolgt im vorliegenden Ausführungsbeispiel über einen Kettenantrieb, wobei in Fig. 4 lediglich die Antriebskette 16 schematisch dargestellt ist. Anstatt dem hier gezeigten Kettenantrieb kann das Radmagazin auch direkt über ein Ritzel oder über Reibschluss angetrieben werden. Eine möglichst kompakte Anordnung wird dann erreicht, wenn das Radmagazin 10 seitlich an das Bett 42 und Gestell der Werkzeugmaschine 40 in aufrechter Position angebracht wird, um kurze Zustellwege der Zufuhreinrichtung 30 zur Spindel 41 zu ermöglichen. Durch diese Anordnung wird die Gesamtbreite des Radmagazins 10 mit radialer Werkzeuglagerung im Wesentlichen durch die Breite der Werkzeuge 2 bestimmt, so dass eine besonders schmale Bauweise realisiert werden kann. Das Radmagazin ist derart über der Bodenfläche angebracht, dass die Unterkante der Werkzeuge 135mm Abstand zur Bodenfläche aufweisen, wenn die Werkzeuge direkt über der Bodenfläche gedreht sind, d.h. wenn die Längsachse der Werkzeuge orthogonal zur Bodenfläche ist.

Die Längsachse des Werkzeugs in der Entnahmeposition im Radmagazin ist parallel und in einer horizontalen Ebene mit dem in der Arbeitsspindel aufgenommenen Werkzeug.

Die hier schematisch dargestellte Zufuhreinrichtung 30 umfasst eine horizontale Linearachse 31 (in Fig. 4 nicht dargestellt), entlang der die Zufuhreinrichtung, durch eine Antriebseinheit 33 angetrieben, in seitlicher Richtung zum Radmagazin verfahrbar ist, um Zustellbewegungen zwischen Spindel, Übergabeposition P1 und Übergabeposition P2 auszuführen. Der Abstand zwischen Spindel und Übergabeposition P1 beträgt im vorliegenden Ausführungsbeispiel ca. 520mm. Die Verfahreinheit für diese Zustellbewegungen verfügt über eine Doppelkette. Die Zufuhreinrichtung kann auch eine zweite Horizontalachse umfassen, die ein Verfahren in radialer Richtung zum Umfang des Radmagazins 10 ermöglicht, um Werkzeuge aus den Rastverbindungen zu entnehmen. Gemäß einer besonders vorteilhaften Ausführungsform ist die Zufuhreinrichtung 30 hierzu teleskopartig ausgebildet (nicht dargestellt), so dass ihr Greifarm in radialer Richtung des Radmagazins ausfahren kann, um ein Werkzeug aus der Halterung zu entnehmen. Die Zufuhreinrichtung 30 ist zur Entnahme der Werkzeuge im gezeigten Ausführungsbeispiel als Schwertwechsler mit Doppelgreifer 32 ausgebildet, um gleichzeitig die Aufnahme des zuletzt genutzten Werkzeugs 2 und des nachfolgend benötigten Werkzeugs 2 zu ermöglichen, so dass ein Werkzeugtausch mit nur einer Horizontalbewegung der Zufuhreinrichtung zwischen Spindel 41 und Radmagazin 10 möglich ist.

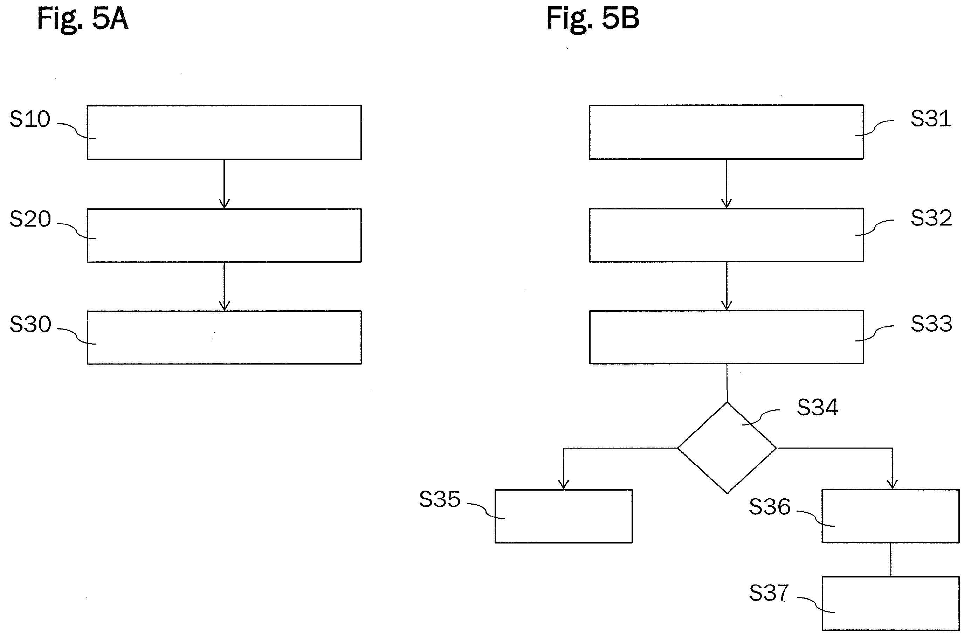

Die Figuren 5A und 5B beschreiben Ausführungsbeispiele des erfindungsgemäßen Werkzeugbereitstellungsverfahrens. In einem ersten Schritt S10 werden eine Mehrzahl von Werkzeugen in einem ersten Werkzeugmagazin 10 bereitgestellt. In einem zweiten Schritt S20 werden eine Mehrzahl von Werkzeugen in mindestens einem zweiten Werkzeugmagazin 20 bereitgestellt. In einem dritten Schritt S30 werden Werkzeuge aus den mindestens zwei verschiedenen Werkzeugmagazinen der Werkzeugmaschine 40 zugeführt. Hierbei wird ein im zweiten Werkzeugmagazin 20 gelagertes Werkzeug, das an einem vorbestimmten Werkzeugwechselzeitpunkt an der Werkzeugmaschine 40 benötigt wird, vor dem vorbestimmten Werkzeugwechselzeitpunkt in einem ersten Schritt dem ersten Werkzeugmagazin 10 zugeführt und in einem zweiten Schritt von dem ersten Werkzeugmagazin 10 der Werkzeugmaschine 40 zugeführt.

Der vorbestimmte Werkzeugwechselzeitpunkt ist der aufgrund des festgelegten Bearbeitungsablaufs an der Spindel bestimmte Zeitpunkt, an dem das benötigte Werkzeug an der Spindel vorgelegt werden muss.

Ein weiteres Ausführungsbeispiel des Schritts S30 ist in Fig. 5B näher beschrieben. In dem vorliegenden Ausführungsbeispiel können Werkzeuge auch direkt vom zweiten Werkzeugmagazin an die Maschine übergeben werden. Im Schritt S31 wird ein Werkzeug bestimmt, das in einem der nachfolgenden Bearbeitungsschritte an der Spindel benötigt wird. Die Werkstückbearbeitungsvorgänge an der Maschinenspindel erfolgen vollautomatisiert und programmgesteuert, so dass das Produktionsverfahren je nach Bearbeitungsstand des Werkstücks eine Werkzeugabfolge erstellt, die festlegt, welche Werkzeuge 2 für die nachfolgenden Bearbeitungsschritte an der Werkzeugspindel 41 benötigt werden. Im Schritt S32 wird dann bestimmt, ob ein derart bestimmtes Werkzeug Ti, das in einem der nachfolgenden Bearbeitungsschritte benötigt wird, im ersten oder zweiten Werkzeugmagazin gelagert ist. In Schritt S33 wird dann eine optimale Bereitstellungsweise ermittelt.

Beispielsweise wird bestimmt, falls das Werkzeug Ti im zweiten Werkzeugmagazin gelagert ist, ob es vorteilhafter ist, das benötigte Werkzeug Ti direkt vom zweiten Werkzeugmagazin 20 der Werkzeugspindel 41 zuzuführen, oder das Werkzeug Ti erst dem ersten Werkzeugmagazin 10 zuzuführen, um es dort zwischenzulagern. Ein Entscheidungskriterium für die Wahl einer der beiden vorgenannten Funktionen kann beispielsweise die kürzeste Bereitstellungszeit sein. Im Schritt S34 wird somit entschieden, ob das Werkzeug Ti direkt aus dem zweiten Werkzeugmagazin an die Spindel geführt wird. Ist dies der Fall, legt die Zufuhreinrichtung 30 das Werkzeug Ti direkt an der Werkzeugspindel 41 vor. Andernfalls wird in einem Zwischenschritt S36 das Werkzeug Ti dem ersten Werkzeugmagazin 10 zugeführt und zu einem späteren Zeitpunkt vom ersten Werkzeugmagazin 10 in Schritt S37 an der Werkzeugspindel 41 bereitgestellt.

Mittels des erfindungsgemäßen Bereitstellungsverfahrens können somit beliebige Werkzeugbereitstellungsstrategien realisiert werden. Durch die Kombination zweier Werkzeugmagazine, deren Werkzeugbestückung im laufenden Betrieb durch Austausch von Werkzeugen zwischen den Werkzeugmagazinen optimiert werden kann, werden vielfältige kombinatorische Werkzeugwechselstrategien ermöglicht, die eine weitaus höhere Flexibilität im Vergleich zu herkömmlichen Bereitstellungsverfahren ermöglichen, die darauf beschränkt sind, Werkzeuge nur zwischen der Spindel und einem Werkzeugmagazin auszutauschen.

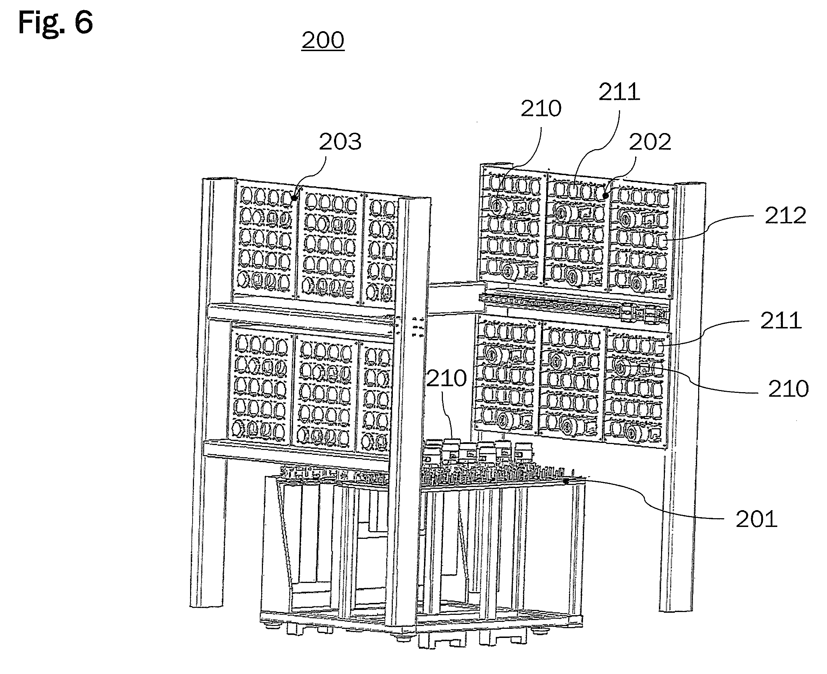

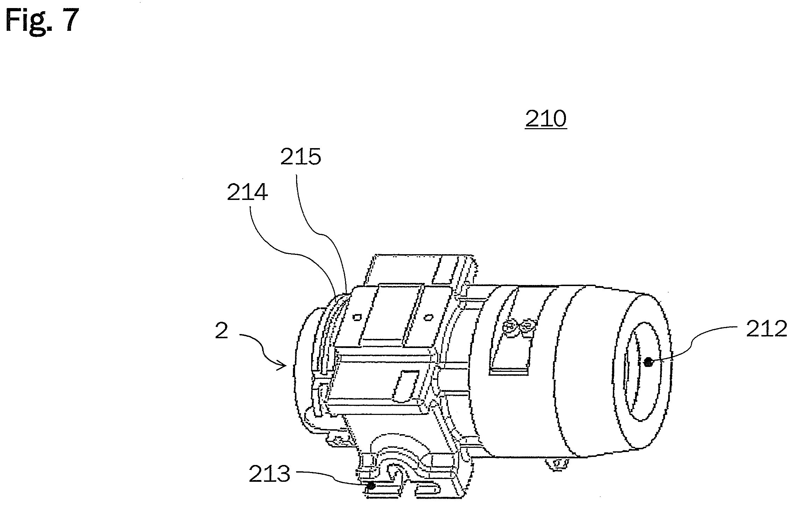

Fig. 6 zeigt ein weiteres vorteilhaftes Ausführungsbeispiel des zweiten Werkzeugmagazins 20. Um eine möglichst hohe Werkzeugkapazität bei geringen Abmaßen zu realisieren, sind die Werkzeuge in dem Werkzeugmagazin 200 in drei Ebenen gelagert. Im gezeigten Ausführungsbeispiel können eine vordere 203 und eine hintere 202 Ebene des Matrixmagazins 200 jeweils mit horizontal gelagerten Werkzeugen bestückt werden. Zusätzlich können in der unteren Ebene 201 weitere Werkzeuge in vertikaler Ausrichtung gelagert werden. Die Werkzeuge können in dem Werkzeugmagazin in einem Köcher 210 gelagert werden, der in Fig. 7 detaillierter beschrieben wird. Das Werkzeugmagazin verfügt über eine Lochstruktur 212 mit kreisförmigen Ausnehmungen um die Köcher 210 zu haltern. Der Durchmesser der kreisförmigen Ausnehmungen ist an den Köcheraußendurchmesser derart angepasst, dass der Köcher 210 in die kreisförmigen Ausnehmungen formschlüssig eingeschoben werden kann. Das Werkzeugmagazin 200 umfasst weiterhin eine Zufuhreinrichtung (nicht gezeigt) mit 3 zueinander orthogonalen Linearachsen, mittels derer die Werkzeuge aus den Lagerplätzen entnommen bzw. wieder abgelegt werden können. Die Anordnung der Werkzeuge in bis zu drei Raumebenen ermöglicht eine große Werkzeugspeicherkapazität bei gleichzeitig geringer Gesamtbreite des Werkzeugmagazins. Weiterhin werden aufgrund der kurzen Verfahrachsen kurze Werkzeugbereitstellungszeiten ermöglicht.

Fig. 7 zeigt eine perspektivische Ansicht eines Köchers 210 bzw. Topfs zum Halten der Werkzeuge im Werkzeugmagazin. Um ein Werkzeug 2 im Werkzeugmagazin zu haltern, kann das Werkzeug in den Werkzeugköcher 210 eingeschoben und dort abgelegt werden, wodurch eine zusätzliche vertikale Ablagebewegung entfällt. Dadurch kann die Packungsdichte im Werkzeugmagazin erhöht und gleichzeitig die Werkzeugbereitstellungszeit verkürzt werden, da die zusätzlichen vertikalen Ablage- bzw. Handlings-Bewegungen entfallen. In Fig. 7 ragt ein Endbereich des Werkzeughohlschaftkegels 214 mit Greiferrille 215 des Werkzeugs 2 aus dem Köcher 210 heraus. Eine Ablage des Werkzeugmagazins im Innern des Werkzeugköchers ist jedoch nur dann möglich, wenn der Durchmesser, auf dem die Köcherbefestigungen angebracht sind, größer als der Werkzeugaußendurchmesser ist. Der Köcher 210 umfasst eine Halterung 213 zur Ablage des Köchers. Die Öffnung 212 ermöglicht den Zugriff durch die Zufuhreinrichtung des Werkzeugmagazins. Der Köcher 210 wird in horizontaler Ausrichtung im Werkzeugmagazin angebracht, so dass die abgelegten Werkzeuge im Köcher 210 auch in horizontaler Richtung gelagert sind. Damit können diese mittels einer horizontalen Verfahrbewegung durch die Zufuhreinrichtung aus dem Köcher entnommen werden.

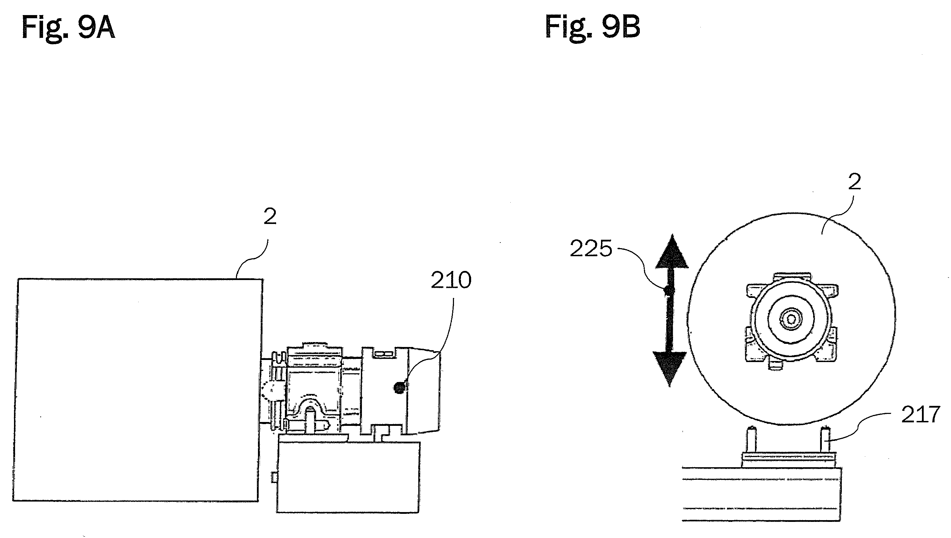

Werkzeuge, deren Außendurchmesser so groß ist, dass sie nicht in den Köcher aufgenommen werden können, werden nur mit ihrem standardisierten Werkzeugkegel am Köcher befestigt, so dass der Teil des Werkzeugs mit großem Außendurchmesser seitlich aus dem Köcher herausragt. Dies ist in den Figuren 9A und 9B dargestellt. Diese größeren Werkzeuge werden dann ähnlich der herkömmlichen Zangenbefestigung 216 mittels einer vertikalen Hubbewegung 225 aus der Halterung 217 im Werkzeugmagazin gelöst. Die Ablagemöglichkeiten für große Werkzeugdurchmesser sind so gestaltet, dass man im Vergleich zu der herkömmlichen Zangenvariante Hub einsparen kann, da die Ablagebolzen 217 nicht bis zur Mitte des Werkzeugs 2 reichen. Dadurch ist auch bei dieser Variante eine Platz- und Zeiteinsparung gegeben.

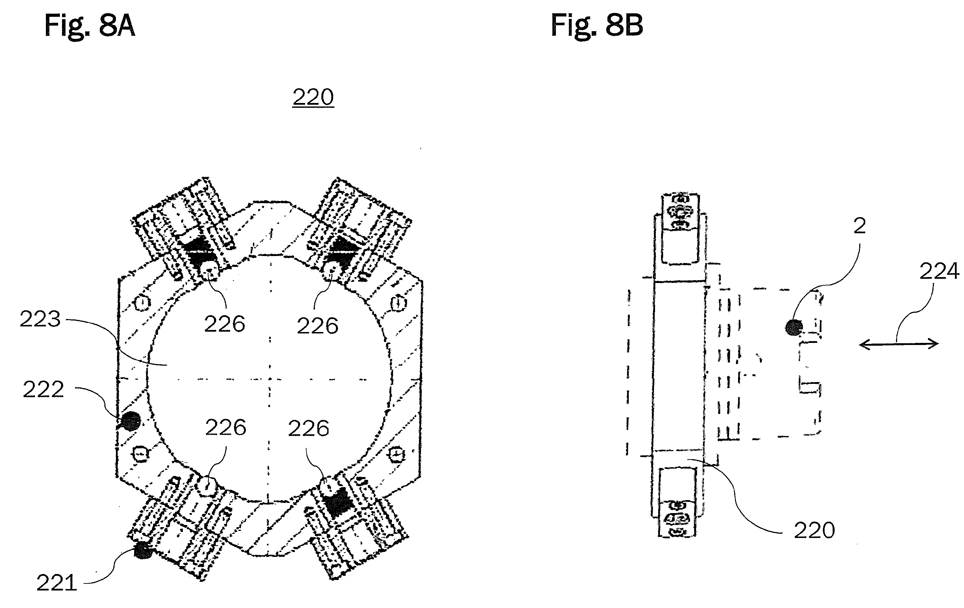

Fig. 8A und Fig. 8B zeigen ein weiteres Ausführungsbeispiel eines Werkzeughalters, um die Werkzeuge ohne zusätzliche vertikale Hubbewegung im Werkzeugmagazin abzulegen. In dem vorliegenden Ausführungsbeispiel umfasst der Werkzeughalter 220 eine Werkzeuggrundplatte 222 mit einer kreisförmigen Ausnehmung 223 zur Aufnahme der Werkzeuge 2. Umfangseitig sind an der Grundplatte 222 vier Kugelrastverbindungen 221 angebracht. Eine Kugelklemmverbindung 221 umfasst eine gehärtete Stahlkugel 226, die durch eine oder mehrere Tellerfedern gehalten ist und mit einer Teilkugeloberfläche in die Ausnehmung 223 hineinragt. Beim Einschub des Werkstücks 2 in die Ausnehmung 223 laufen die gehärteten Stahlkugeln 226 der Kugelrastung an dem Werkzeugkegel entlang, bis sie in die Greiferrille des standardisierten Werkzeugkegels einrasten und das Werkzeug 2 in dieser Position halten. Die durch Kugelklemmverbindungen 221 gehaltene Werkzeuge 2 können daher mit einer horizontalen Greiferbewegung entnommen werden. In Fig. 8B deutet der Pfeil 224 die horizontale Einschubrichtung des Werkzeugs 2 in die Werkzeughalterung 220 an. Voraussetzung für einen derartigen Befestigungsmechanismus ist, dass der Werkzeugaußendurchmesser kleiner ist als der Rillenaußendurchmesser des Werkzeughohlschaftkegels. Das Einsparen einer zusätzlichen vertikalen Hubbewegung bei der Entnahme bzw. der Ablage des Werkzeugs ermöglicht eine höhere Anordnungsdichte der Werkzeuge im Magazin, da der Platz, der vormals für die Hubbewegung benötigt wurde, nun eingespart werden kann.

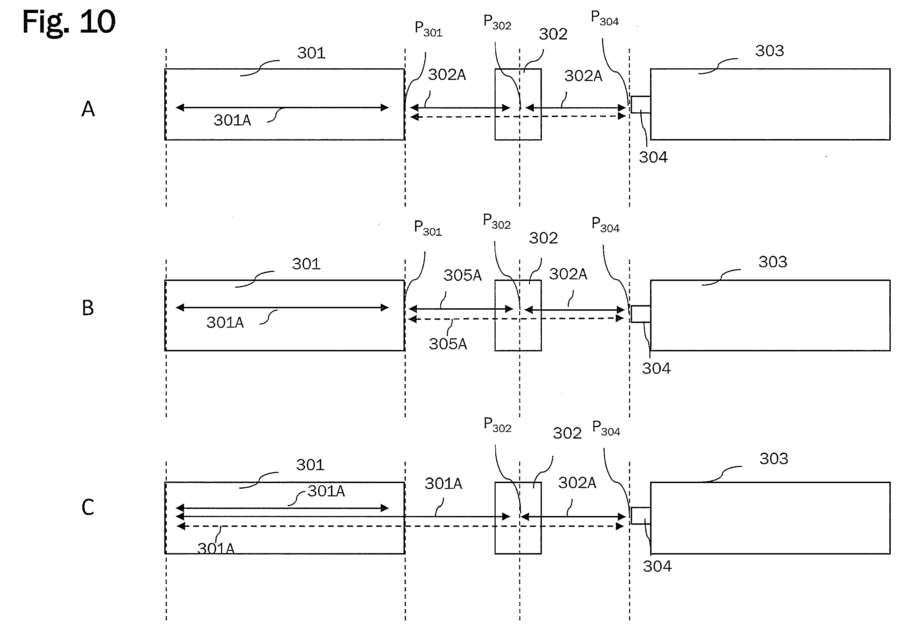

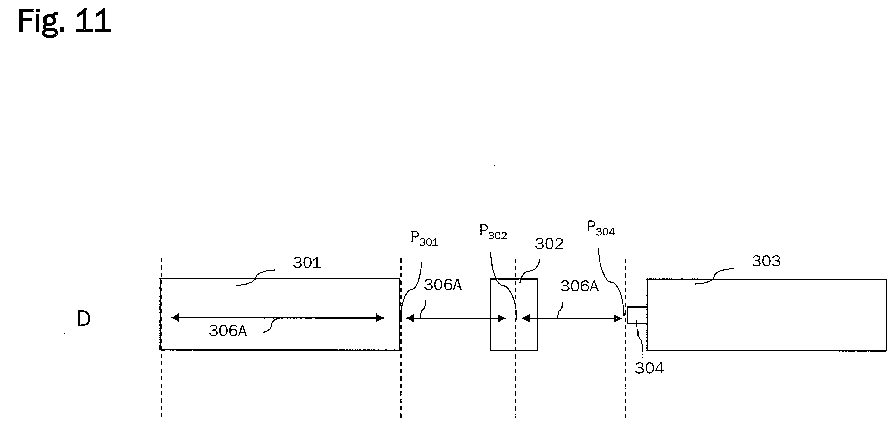

In Fig. 10 sind drei weitere Ausführungsbeispiele A, B und C eines Systems und Verfahrens zum Bereitstellen von Werkzeugen dargestellt. Zur Vereinfachung der Darstellung wurden in Fig. 10 die konstruktiven Details ausgelassen, um die Verfahrwege und Übergabepositionen bei der Werkzeugbereitstellung deutlicher darzustellen. Es versteht sich, dass vorteilhafterweise die in den Figuren 10 und 11 gezeigten Werkzeugmagazine 301 als Matrix und 302 als Radmagazin ausgeführt sind, wie sie in den Figuren 1 bis 3 gezeigt sind.

Gemäß dem mit A gekennzeichneten Ausführungsbeispiel umfasst das System bzw. das Verfahren zum Bereitstellen von Werkzeugen eine Werkzeugmaschine 303 mit einer Spindel 304 und zwei Werkzeugmagazine 301, 302, in denen Werkzeuge, die an der Spindel 304 benötigt werden, gelagert werden. Jedes der Werkzeugmagazine verfügt über eine eigene Zufuhreinrichtung 301A bzw. 302A, um Werkzeuge aus den Lagerpositionen des jeweiligen Werkzeugmagazins zu entnehmen bzw. diese dort abzulegen. Das erste Werkzeugmagazin 302 befindet sich zwischen dem zweiten Werkzeugmagazin 301 und der Spindel 304. Die Pfeile kennzeichnen die Verfahrwege der Zufuhreinrichtungen 301A bzw. 302A. Gemäß dem Ausführungsbeispiel A führt die Zufuhreinrichtung 301A des zweiten Werkzeugmagazins 301 Verfahrbewegungen innerhalb des zweiten Werkzeugmagazins 301A aus, beispielsweise entlang dreier Linearachsen (X-, Y-und Z-Achse), um Werkzeuge aus dem zweiten Werkzeugmagazin 301 zu entnehmen bzw. auf einem Lagerplatz im Magazin 301 abzulegen. Die Zufuhreinrichtung 301A stellt die Werkzeuge an einer Übergabeposition P₃₀₁ bereit. Die Übergabeposition kann auch außerhalb des Werkzeugmagazins 301 liegen, vorzugsweise am äußeren Rand des Werkzeugmagazins 301, der dem ersten Werkzeugmagazin 302 zugewandt ist.

Die Zufuhreinrichtung 302A des ersten Werkzeugmagazins 302 erfüllt in dem vorliegenden Ausführungsbeispiel A eine Doppelfunktion, indem sie sowohl eingerichtet ist, Werkzeuge aus dem ersten Werkzeugmagazin 302 zum Bestücken der Spindel 304 dieser zuzuführen als auch weiterhin Werkzeuge zwischen dem ersten 302 und zweiten 301 Werkzeugmagazin auszutauschen. Diese beiden Zustellbewegungen sind durch die beiden mit 302A gekennzeichneten Pfeile des Ausführungsbeispiels A gekennzeichnet. Der Pfeil 302A zwischen dem ersten 302 und zweiten 301 Werkzeugmagazin beschreibt die Funktion der Zufuhreinrichtung 302A als Übergabevorrichtung, die Werkzeuge zwischen dem ersten 302 und zweiten 301 Werkzeugmagazin austauscht. Hierzu verfährt die Zufuhreinrichtung 302A zur Übergabeposition P₃₀₁, um dort ein von der Zufuhreinrichtung 301A bereitgestelltes Werkzeug aufzunehmen. Anschließend verfährt die Zufuhreinrichtung 302A zur Übergabeposition P₃₀₂, um dort das Werkzeug im ersten Werkzeugmagazin 302 abzulegen. Weiterhin kann die Zufuhreinrichtung 302A zwischen der Übergabeposition P₃₀₂ und der Übergabeposition P₃₀₄ verfahren, um Werkzeuge vom ersten Werkzeugmagazin 302 der Spindel 304 zuzuführen. Dies ist durch den zweiten Pfeil 302A zwischen dem ersten Werkzeugmagazin 302 und der Spindel 304 schematisch dargestellt.

In einer weiteren vorteilhaften Ausführungsform kann die Zufuhreinrichtung 302A oder die Zufuhreinrichtung 301A zusätzlich eingerichtet sein, vom zweiten Werkzeugmagazin entnommene Werkzeuge direkt der Spindel 304 zuzuführen, um beispielsweise einen Flaschenhals durch das erste Werkzeugmagazin 302 zu vermeiden. Dieser Verfahrweg ist durch den gestrichelten Pfeil in Fig. 10, Konfiguration A dargestellt. Das in den Figuren 1 bis 3 dargestellte System stellt ein besonderes Ausführungsbeispiel mit Rad- bzw. Matrixmagazin der Konfiguration A in Fig. 10 dar, ohne auf diese konstruktiven Ausführungen beschränkt zu sein.

Ein weiteres Ausführungsbeispiel zeigt Konfiguration B in Fig. 10. Im Unterschied zur Konfiguration A ist eine dritte Zufuhreinrichtung 305A vorgesehen, die den Werkzeugaustausch zwischen dem ersten 302 und zweiten 301 Werkzeugmagazin ausführt. Hierzu verfährt die dritte Zufuhreinrichtung 305A entlang einer Linearachse zwischen den Übergabepositionen P₃₀₁ und P₃₀₂. Dieser Verfahrweg ist durch den mit dem Bezugszeichen 305A gekennzeichneten Pfeil schematisch dargestellt. Eine zusätzliche dritte Zufuhreinrichtung 305A verkürzt die Werkzeugbereitstellungszeit, so dass Werkzeuge bereits zwischen dem ersten 302 und zweiten 301 Werkzeugmagazin ausgetauscht werden können, während die Zufuhreinrichtung 302A noch eie Verfahrbewegung zu oder von der Spindel 304 ausführt. In einer weiteren vorteilhaften Ausführungsform kann die Zufuhreinrichtung 305A zusätzlich eingerichtet sein, vom zweiten Werkzeugmagazin an der Position P₃₀₁ bereitgestellte Werkzeuge direkt der Spindel 304 zuzuführen, um beispielsweise einen Flaschenhals durch das erste Werkzeugmagazin 302 zu vermeiden. Dieser Verfahrweg ist durch den gestrichelten Pfeil in Fig. 10, Konfiguration B dargestellt.

Ein weiteres Ausführungsbeispiel zeigt Konfiguration C in Fig. 10. Im Unterschied zur Konfiguration A ist es nicht die Zufuhreinrichtung 302A des ersten Werkzeugmagazins 302, sondern die Zufuhreinrichtung 301A des zweiten Werkzeugmagazins 301, die die Doppelfunktion ausübt. So ist die Zufuhreinrichtung 301A einerseits eingerichtet, benötigte Werkzeuge aus den Lagerplätzen des zweiten Werkzeugmagazins 301 zu entnehmen bzw. zurückzulegen und weitere gängige Werkzeugsortieraufgaben innerhalb des zweiten Werkzeugmagazins 301 auszuführen. Des Weiteren ist die Zufuhreinrichtung 301A eingerichtet, benötigte Werkzeuge zur Zwischenlagerung dem ersten Werkzeugmagazin 302 zuzuführen. Hierzu verfährt die Zufuhreinrichtung entlang einer Linearachse bis zu der Übergabeposition P₃₀₂ und legt dort das Werkzeug im ersten Werkzeugmagazin 302 ab. Diese Verfahrwege der Zufuhreinrichtung 301A sind durch die mit dem Bezugszeichen 301A gekennzeichneten Pfeile schematisch dargestellt.

In einer weiteren vorteilhaften Ausführungsform kann die Zufuhreinrichtung 301A gemäß der Konfiguration C zusätzlich eingerichtet sein, vom zweiten Werkzeugmagazin entnommene Werkzeuge direkt der Spindel 304 zuzuführen, um beispielsweise einen Flaschenhals durch das erste Werkzeugmagazin 302 zu vermeiden. Dieser Verfahrweg ist durch den gestrichelten Pfeil in Fig. 10, Konfiguration C dargestellt.

In Fig. 11 ist ein weiteres Ausführungsbeispiel D eines Systems und Verfahrens zum Bereitstellen von Werkzeugen dargestellt. In Abwandlung zu den in Fig. 10 beschriebenen Ausführungsbeispielen verfügt das System mit den zwei Werkzeugmagazinen 301 und 302 nur über eine Zufuhreinrichtung 306A, deren Verfahrwege schematisch durch die in Fig. 11 mit dem Bezugszeichen 306A versehenen Pfeile schematisch dargestellt sind. Die Zufuhreinrichtung 306A kann Werkzeuge sowohl aus dem ersten 302 wie auch dem zweiten 301 Werkzeugmagazin entnehmen bzw. dort ablegen. Die Zufuhreinrichtung 306A ist entlang einer Linearachse sowohl zwischen dem ersten 302 und dem zweiten 301 Werkzeugmagazin verfahrbar, als auch zwischen dem ersten Werkzeugmagazin 302 und der Spindel 304. Die Zufuhreinrichtung 306A kann somit Werkzeuge vom ersten als auch vom zweiten Werkzeugmagazin der Spindel 304 direkt zuführen. Zusätzlich ist die Zufuhreinrichtung 306A eingerichtet, Werkzeuge zwischen dem ersten 302 und dem zweiten 301 Werkzeugmagazin auszutauschen, d.h. als Übergabevorrichtung zu fungieren. Selbstverständlich können die Werkzeugmagazine des hier schematisch dargestellten Systems auch alle zuvor beschriebenen konstruktiven Merkmale aufweisen. So kann beispielsweise das zweite Werkzeugmagazin 301 als Matrixmagazin mit hoher Werkzeugspeicherkapazität und das erste Werkzeugmagazin 302 als schnelles Radmagazin, das näher an der Spindel 304 positioniert ist, realisiert werden.

Die vorliegende Erfindung kann durch die verschiedenen Konfigurationen somit jeweils optimal an die jeweilige Maschineninstallation und die zu Verfügung stehenden Verfahrwege und Stellplätze angepasst werden.

Die einzelnen Merkmale der Erfindung sind selbstverständlich nicht auf die beschriebenen Kombinationen von Merkmalen in Rahmen der vorgestellten Ausführungsbeispiele beschränkt. Beispielsweise sind das erste und zweite Werkzeugmagazin nicht auf einen bestimmten Typ (Radmagazin, Regalmagazin, Kettenmagazin etc.) beschränkt. Weiterhin können mehrere Werkzeugmagazine eingesetzt und entsprechend eingerichtet sein, einem Hauptmagazin als Zuliefermagazin zu dienen.

## Patentansprüche

1. System zum Bereitstellen von Werkzeugen an einer Werkzeugmaschine mit einer Spindel (41), mit
einem ersten Werkzeugmagazin (10) zur Aufnahme einer Mehrzahl von Werkzeugen (2);
einer ersten Zufuhreinrichtung (30), die dazu eingerichtet ist, Werkzeuge (2) aus dem ersten Werkzeugmagazin (10) zu entnehmen und der Spindel (41) zuzuführen;
mindestens ein zweites Werkzeugmagazin (20) zur Aufnahme einer Mehrzahl von Werkzeugen (2); und
einer Übergabevorrichtung, die dazu eingerichtet ist, dem zweiten Werkzeugmagazin (20) entnommene Werkzeuge (2) dem ersten Werkzeugmagazin (10) zuzuführen, so dass das zweite Werkzeugmagazin (20) als Zuliefermagazin für das erste Werkzeugmagazin (10) dient, **gekennzeichnet durch**:
eine zweite Zufuhreinrichtung (23), die dazu eingerichtet ist, Werkzeuge (2) aus dem zweiten Werkzeugmagazin (20) zu entnehmen und an einer vorbestimmten Übergabeposition bereitzustellen;
und wobei die Übergabevorrichtung dazu eingerichtet ist, dem zweiten Werkzeugmagazin (20) entnommene Werkzeuge (2) direkt der Spindel (41) zuzuführen.

2. System nach Anspruch 1, **dadurch gekennzeichnet, dass** die erste Zufuhreinrichtung (30) Werkzeuge (2) aus dem ersten Werkzeugmagazin (10) der Spindel (41) zu- und/oder rückführen kann, während die zweite Zufuhreinrichtung (23) zeitlich parallel ein Werkzeug (2) an der vorbestimmten Übergabeposition bereitstellt oder ein vom erstem Werkzeugmagazin (10) zugeführtes Werkzeug (2) im zweiten Werkzeugmagazin (20) ablegt.

3. System nach einem der Ansprüche 1 oder 2, wobei
die Übergabevorrichtung und die erste Zufuhreinrichtung (30) als eine Baueinheit ausgebildet sind, mittels derer Werkzeuge (2) zwischen dem ersten Werkzeugmagazin (10) und der Spindel (41) verfahren werden und mittels derer Werkzeuge (2) zwischen dem ersten Werkzeugmagazin (10) und dem zweiten Werkzeugmagazin (20) verfahren werden, wobei die Übergabevorrichtung an der vorbestimmten Übergabeposition (P2) durch die zweite Zufuhreinrichtung (23) bereitgestellte Werkzeuge (2) aufnimmt oder wobei die Übergabevorrichtung an der vorbestimmten Übergabeposition (P2) aus dem ersten Werkzeugmagazin (10) entnommene Werkzeuge (2) der zweiten Zufuhreinrichtung (23) bereitstellt,
oder wobei
die Übergabevorrichtung als eine von der ersten und zweiten Zufuhreinrichtung (30, 23) separate Baueinheit bereitgestellt wird, die an der vorbestimmten Übergabeposition (P2) von der zweiten Zufuhreinrichtung (23) bereitgestellte Werkzeuge (2) aufnimmt und dem ersten Werkzeugmagazin (10) zuführt,
oder wobei
die Übergabevorrichtung und die zweite Zufuhreinrichtung (23) als eine Baueinheit ausgebildet ist, mittels derer Werkzeuge (2) aus Lagerplätzen des zweiten Werkzeugmagazins (20) entnommen und zwischen dem zweiten Werkzeugmagazin (20) und dem ersten Werkzeugmagazin (10) verfahren werden, um Werkzeuge (2) zwischen dem zweiten Werkzeugmagazin (20) und dem ersten Werkzeugmagazin (10) auszutauschen.

4. System nach einem der vorhergehenden Ansprüche, **dadurch gekennzeichnet, dass** die Übergabevorrichtung ein im zweiten Werkzeugmagazin (20) aufgenommenes Werkzeug (2) dem ersten Werkzeugmagazin (10) zuführt, in dem es das Werkzeug (2) auf einen vorbestimmten Übergabeplatz (3) ablegt und das abgelegte Werkzeug (2) zu einem späteren Zeitpunkt von dem Übergabeplatz (3) dem ersten Werkzeugmagazin (10) zuführt.

5. System nach einem der vorhergehenden Ansprüche, **dadurch gekennzeichnet, dass** das erste Werkzeugmagazin als Radmagazin (10) ausgebildet ist, in dem die Werkzeuge (2) mit ihrer Längsachse in radialer Richtung orientiert gehaltert sind.

6. System nach einem der vorhergehenden Ansprüche, **dadurch gekennzeichnet, dass** die Werkzeuge (2) im ersten Werkzeugmagazin (10) in Werkzeugaufnahmen (11) entlang des Umfangs (12) des ersten Werkzeugmagazins (10) derart gehaltert sind, dass die Längsachsen (L1) der Werkzeuge (2) in einer Ebene liegen und vom Umfang des ersten Werkzeugmagazins (10) abstehen, und die Werkzeuge (2) entlang des Umfangs (12) des ersten Werkzeugmagazins (10) verfahren werden können.

7. System nach einem der Ansprüche 5 oder 6, weiter umfassend eine Werkzeugmaschine (40) mit einer Spindel (41) zur Aufnahme von Werkzeugen (2), wobei das erste Werkzeugmagazin (10) derart an der Werkzeugmaschine (40) angeordnet ist, dass die Umfangslinie (12) entlang derer die Werkzeuge (2) verfahren werden, eine Ebene aufspannt, die senkrecht zu einer Bodenfläche ausgerichtet ist und im Wesentlichen parallel zu einer Ebene verläuft, die durch ein Bett (42) und einen Ständer der Werkzeugmaschine (40) aufgespannt wird.

8. System nach einem der vorhergehenden Ansprüche, **dadurch gekennzeichnet, dass** die erste (30) oder die zweite (23) Zufuhreinrichtung dazu eingerichtet ist, Werkzeuge (2) direkt von dem zweiten Werkzeugmagazin (20) der Werkzeugmaschine (40) zuzuführen.

9. System nach einem der vorhergehenden Ansprüche, **dadurch gekennzeichnet, dass** das zweite Werkzeugmagazin (20) als Matrixmagazin oder Regalmagazin ausgebildet ist.

10. System nach einem der vorhergehenden Ansprüche, **dadurch gekennzeichnet, dass** eine durchschnittliche Werkzeugbereitstellungszeit des ersten Werkzeugmagazins (10) kürzer als eine durchschnittliche Werkzeugbereitstellungszeit des zweiten Werkzeugmagazins (20) ist, so dass ein im ersten Werkzeugmagazin (10) gelagertes Werkzeug (2) schneller als ein im zweiten Werkzeugmagazin (20) gelagertes Werkzeug (2) von seinem Lagerplatz entnommen und einer vorbestimmten Werkzeugbereitstellungsposition zugeführt werden kann, und dass eine Werkzeugspeicherkapazität des zweiten Werkzeugmagazins (20) größer als eine Werkzeugspeicherkapazität des ersten Werkzeugmagazins (10) ist, so dass im zweiten Werkzeugmagazin (20) eine höhere Anzahl von Werkzeugen (2) als im ersten Werkzeugmagazin (10) gelagert werden kann.

11. System nach einem der der vorhergehenden Ansprüche, weiter umfassend eine Werkzeugmaschine (40) mit einer Spindel (41) zur Aufnahme von Werkzeugen (2), wobei der Verfahrweg des Werkzeugs (2) von dem ersten Werkzeugmagazin zur Spindel (41) kleiner als der Verfahrweg des Werkzeugs (2) von dem zweiten Werkzeugmagazins (20) zur Maschinenspindel (41) ist.

12. System nach Anspruch 11, **dadurch gekennzeichnet, dass** ein Werkzeug (2) in einer ersten Übergabeposition (P1), einer zweiten Übergabeposition (P2) und einer Wechselposition an der Spindel (41) derart bereitgestellt wird, dass die Längsachsen der Werkzeuge (2) in diesen Positionen in horizontaler Ausrichtung und parallel zueinander ausgerichtet sind, wobei die erste bzw. zweite Übergabeposition diejenige Werkzeugbereitstellungsposition ist, an der ein Werkzeug (2) des ersten bzw. zweiten Werkzeugmagazins (10; 20) an die Übergabevorrichtung übergeben wird.

13. System nach Anspruch 1, **dadurch gekennzeichnet, dass** das erste Werkzeugmagazin (10) näher an der Spindel (41) angeordnet ist als das zweite Werkzeugmagazin (20), und dass eine durchschnittliche Werkzeugbereitstellungszeit des ersten Werkzeugmagazins (10) kürzer als eine durchschnittliche Werkzeugbereitstellungszeit des zweiten Werkzeugmagazins (20) ist, so dass ein im ersten Werkzeugmagazin (10) gelagertes Werkzeug (2) schneller als ein im zweiten Werkzeugmagazin (20) gelagertes Werkzeug (2) von seinem Lagerplatz entnommen und einer vorbestimmten Werkzeugbereitstellungsposition an der Spindel (41) zugeführt werden kann.

14. Werkzeugmaschine (40) zum Bearbeiten eines Werkstücks mit einer Werkzeugwechseleinrichtung zum Wechseln eines Werkzeugs (2) an der Werkzeugmaschine (40) umfassend ein System zum Bereitstellen von Werkzeugen (2) an der Werkzeugmaschine (40) nach einem der Ansprüche 1 bis 13.

15. Verfahren zum Bereitstellen von Werkzeugen (2) an einer Werkzeugmaschine (40) nach Anspruch 14, bei dem Werkzeuge (2) aus mindestens zwei verschiedenen Werkzeugmagazinen (10, 20) einer Werkzeugmaschine (40) zugeführt werden, das folgende Schritte umfasst:
- Bereitstellen einer Mehrzahl von Werkzeugen (2) in einem ersten Werkzeugmagazin (10);
- Bereitstellen einer Mehrzahl von Werkzeugen (2) in mindestens einem zweiten Werkzeugmagazin (20); und
- Zuführen der Werkzeuge (2) aus den mindestens zwei verschiedenen Werkzeugmagazinen (10, 20) zu der Werkzeugmaschine (40), wobei ein im zweiten Werkzeugmagazin (20) gelagertes Werkzeug (2), das an einem vorbestimmten Werkzeugwechselzeitpunkt an der Werkzeugmaschine (40) benötigt wird, vor dem vorbestimmten Werkzeugwechselzeitpunkt in einem ersten Schritt von einer Übergabevorrichtung verfahren und dem ersten Werkzeugmagazin (10) zugeführt und in einem zweiten Schritt von einer Zufuhreinrichtung aus dem ersten Werkzeugmagazin (10) entnommen, verfahren und der Werkzeugmaschine (40) zugeführt wird.

## Claims

1. A system for providing tools at a machine tool with a spindle (41), including
a first tool magazine (10) for receiving a plurality of tools (2);
a first supply device (30), which is arranged to remove tools (2) from the first tool magazine (10) and supply them to the spindle (41);
at least one second tool magazine (20) for receiving a plurality of tools (2); and
a transfer device, which is arranged to supply tools (2) removed from the second tool magazine (20) to the first tool magazine (10) such that the second tool magazine (20) serves as a delivery magazine for the first tool magazine (10),
**characterized by**:
a second supply device (23), which is arranged to remove tools (2) from the second tool magazine (20) and provide them in a predetermined transfer position;
and wherein the transfer device is arranged to supply tools (2) removed from the second tool magazine (20) directly to the spindle (41).

2. The System according to claim 1, **characterized in that** the first supply device (30) is able to supply and/or return tools (2) from the first tool magazine (10) to the spindle (41), while the second supply device (23) provides a tool (2) in the predetermined transfer position parallel in time or deposits a tool (2) supplied from the first tool magazine (10) in the second tool magazine (20).

3. The system according to any one of claims 1 or 2, wherein
the transfer device and the first supply device (30) are formed as one constructional unit, by means of which tools (2) are moved between the first tool magazine (10) and the spindle (41) and by means of which tools (2) are moved between the first tool magazine (10) and the second tool magazine (20), wherein the transfer device picks up tools (2) provided by the second supply device (23) in the predetermined transfer position (P2) or wherein the transfer device provides tools (2) removed from the first tool magazine (10) in the predetermined transfer position (P2) to the second supply device (23),
or wherein
the transfer device is provided as a constructional unit separate from the first and the second supply device (30, 23), which picks up tools (2) provided by the second supply device (23) in the predetermined transfer position (P2) and supplies them to the first tool magazine (10),
or wherein
the transfer device and the second supply device (23) are formed as one constructional unit, by means of which tools (2) are removed from storage places of the second tool magazine (20) and moved between the second tool magazine (20) and the first tool magazine (10) to exchange tools (2) between the second tool magazine (20) and the first tool magazine (10).

4. The system according to any one of the preceding claims, **characterized in that** the transfer device supplies a tool (2) received in the second tool magazine (20) to the first tool magazine (10) by depositing the tool (2) on a predetermined transfer place (3) and supplying the deposited tool (2) from the transfer place (3) to the first tool magazine (10) at a later point of time.

5. The system according to any one of the preceding claims, **characterized in that** the first tool magazine is formed as a wheel magazine (10), in which the tools (2) are retained oriented in radial direction with their longitudinal axis.

6. The system according to any one of the preceding claims, **characterized in that** the tools (2) are retained in the first tool magazine (10) in tools sockets (11) along the circumference (12) of the first tool magazine (10) such that the longitudinal axes (L1) of the tools (2) are situated in one plane and protrude from the circumference of the first tool magazine (10) and the tools (2) can be moved along the circumference (12) of the first tool magazine (10).

7. The system according to any one of claims 5 or 6, further including a machine tool (40) with a spindle (41) for receiving tools (2), wherein the first tool magazine (10) is disposed at the machine tool (40) such that the circumferential line (12), along which the tools (2) are moved, spans a plane, which is oriented perpendicularly to a ground surface and extends substantially parallel to a plane, which is spanned by a bed (42) and a stand of the machine tool (40).

8. The system according to any one of the preceding claims, **characterized in that** the first (30) or the second (23) supply device is arranged to supply tools (2) directly from the second tool magazine (20) to the machine tool (40).

9. The system according to any one of the preceding claims, **characterized in that** the second tool magazine (20) is formed as a matrix magazine or rack magazine.

10. The system according to any one of the preceding claims, **characterized in that** an average tool provision time of the first tool magazine (10) is shorter than an average tool provision time of the second tool magazine (20) such that a tool (2) stored in the first tool magazine (10) can be faster removed from its storage place and supplied to a predetermined tool provision position than a tool (2) stored in the second tool magazine (20), and that a tool storage capacity of the second tool magazine (20) is larger than a tool storage capacity of the first tool magazine (10) such that a higher number of tools (2) can be stored in the second tool magazine (20) than in the first tool magazine (10).

11. The system according to any one of the preceding claims, further including a machine tool (40) with a spindle (41) for receiving tools (2), wherein the movement path of the tool (2) from the first tool magazine to the spindle (41) is smaller than the movement path of the tool (2) from the second tool magazine (20) to the machine spindle (41).

12. The system according to claim 11, **characterized in that** a tool (2) is provided in a first transfer position (P1), a second transfer position (P2) and a change position at the spindle (41) such that the longitudinal axes of the tools (2) in these positions are oriented in horizontal orientation and parallel to each other, wherein the first and the second transfer position, respectively, are that tool provision position, in which a tool (2) of the first and the second tool magazine (10; 20), respectively, is transferred to the transfer device.

13. The system according to claim 1, **characterized in that** the first tool magazine (10) is disposed closer to the spindle (41) than the second tool magazine (20) and that an average tool provision time of the first tool magazine (10) is shorter than an average tool provision time of the second tool magazine (20) such that a tool (2) stored in the first tool magazine (10) can be faster removed from its storage place and supplied to a predetermined tool provision position at the spindle (41) than a tool (2) stored in the second tool magazine (20).

14. The machine tool (40) for processing a workpiece with a tool change device for changing a tool (2) at the machine tool (40) including a system for providing tools (2) at the machine tool (40) according to any one of claims 1 to 13.

15. A method for providing tools (2) at a machine tool (40) according to claim 14, in which tools (2) from at least two different tool magazines (10, 20) are supplied to a machine tool (40), which includes the following steps:
- providing a plurality of tools (2) in a first tool magazine (10);
- providing a plurality of tools (2) in at least one second tool magazine (20); and
- supplying the tools (2) from the at least two different tool magazines (10, 20) to the machine tool (40), wherein a tool (2) stored in the second tool magazine (20), which is required at the machine tool (40) at a predetermined tool change point of time, is moved and supplied to the first tool magazine (10) by a transfer device in a first step before the predetermined tool change point of time and removed from the first tool magazine (10), moved and supplied to the machine tool (40) by a supply device in a second step.

## Revendications

1. Système pour mettre à disposition des outils sur une machine-outil pourvue d'une broche (41), comportant :
- un premier magasin à outils (10) pour recevoir une pluralité d'outils (2) ;
- un premier moyen d'amenée (30) conçu pour prélever des outils (2) dans le premier magasin à outils (10) et pour les amener à la broche (41) ;
- au moins un second magasin à outils (20) pour recevoir une pluralité d'outils (2) ; et
- un dispositif de transfert conçu pour transférer au premier magasin à outils (10) des outils (2) prélevés dans le second magasin à outils (20), de telle sorte que le second magasin à outils (20) sert de magasin de fourniture pour le premier magasin à outils (10),
**caractérisé par**
- un second moyen d'amenée (23) qui est conçu pour prélever des outils (2) dans le second magasin à outils (20) et pour les mettre à disposition à une position de transfert prédéterminée ;
et dans lequel
le dispositif de transfert est conçu pour amener directement à la broche (41) des outils (2) prélevés dans le second magasin à outils (20).

2. Système selon la revendication 1, **caractérisé en ce que** le premier moyen d'amenée (30) est capable d'amener ou de retourner à la broche (41) des outils (2) depuis le premier magasin à outils (10), tandis que le second moyen d'amenée (23) met à disposition parallèlement dans le temps un outil (2) à la position de transfert prédéterminée, ou pose dans le second magasin à outils (20) un outil (2) amené depuis le premier magasin à outils (10).

3. Système selon l'une des revendications 1 ou 2, dans lequel le dispositif de transfert et le premier moyen d'amenée (30) sont réalisés sous forme d'unité structurelle permettant de déplacer des outils (2) entre le premier magasin à outils (10) et la broche (41) et permettant de déplacer des outils (2) entre le premier magasin à outils (10) et le second magasin à outils (20), et à la position de transfert prédéterminée (P2) le dispositif de transfert reçoit des outils (2) mis à disposition par le second moyen d'amenée (23), ou bien à la position de transfert prédéterminée (P2), le dispositif de transfert met à disposition du second moyen d'amenée (23) des outils (2) prélevés dans le premier magasin à outils (10),
et dans lequel
le dispositif de transfert est prévu sous forme d'unité structurelle séparée du premier et du second moyens d'amenée (30, 23), qui, à la position de transfert prédéterminée (P2), reçoit des outils (2) mis à disposition par le second moyen d'amenée (23) et les amène au premier magasin à outils (10),
ou dans lequel
le dispositif de transfert et le second moyen d'amenée (23) sont réalisés sous forme d'unité structurelle permettant de prélever des outils (2) dans les emplacements de stockage du second magasin à outils (20) et à les déplacer entre le second magasin à outils (20) et le premier magasin à outils (10), afin d'échanger des outils (2) entre le second magasin à outils (20) et le premier magasin à outils (10).

4. Système selon l'une au moins des revendications précédentes, **caractérisé en ce que** le dispositif de transfert amène au premier magasin à outils (10) un outil (2) reçu dans le second magasin à outils (20) en posant l'outil (2) à un emplacement de transfert prédéterminé (3) et en amenant l'outil posé (2) depuis l'emplacement de transfert (3) au premier magasin à outils (10) à un instant ultérieur.

5. Système selon l'une des revendications précédentes, **caractérisé en ce que** le premier magasin à outils est réalisé sous forme de magasin à roue (10) dans lequel les outils (2) sont retenus en ayant leur axe longitudinal orienté en direction radiale.

6. Système selon l'une des revendications précédentes, **caractérisé en ce que** les outils (2) sont retenus dans le premier magasin à outils (10) dans des logements d'outils (11) le long du pourtour (12) du premier magasin à outils (10) de telle sorte que les axes longitudinaux (L1) des outils (2) se trouvent dans un plan et font saillie du pourtour du premier magasin à outils (10), et que les outils (2) peuvent être déplacés le long du pourtour (12) du premier magasin à outils (10).

7. Système selon l'une des revendications 5 ou 6, comprenant en outre une machine-outil (40) pourvue d'une broche (41) pour recevoir des outils (2), le premier magasin à outils (10) étant agencé sur la machine-outil (40) de telle sorte que la ligne périphérique (12) le long de laquelle les outils (2) sont déplacés définit un plan orienté perpendiculairement à une surface de sol et s'étendant sensiblement parallèlement à un plan défini par un banc (42) et par un montant de la machine-outil (40).

8. Système selon l'une des revendications précédentes, **caractérisé en ce que** le premier (30) ou le second moyen d'amenée (23) est conçu pour amener des outils (2) directement depuis le second magasin à outils (20) à la machine-outil (40).

9. Système selon l'une des revendications précédentes, **caractérisé en ce que** le second magasin à outils (20) est réalisé sous forme de magasin à matrice ou de magasin à rayons.

10. Système selon l'une des revendications précédentes, **caractérisé en ce qu'**un temps moyen de mise à disposition d'outil du premier magasin à outils (10) est plus court qu'un temps moyen de mise à disposition d'outil du second magasin à outils (10), de sorte qu'un outil (2) stocké dans le premier magasin à outils (10) peut être enlevé de son emplacement de stockage et être amené à une position de mise à disposition d'outil plus rapidement qu'un outil (2) stocké dans le second magasin à outils (20), et qu'une capacité de stockage d'outils du second magasin à outils (20) est supérieure à une capacité de stockage d'outils du premier magasin à outils (10), de sorte que le second magasin à outils (20) permet de stocker un nombre d'outils (2) plus élevé que celui du premier magasin à outils (10).

11. Système selon l'une des revendications précédentes, comprenant en outre une machine-outil (40) pourvue d'une broche (41) pour recevoir des outils (2), le trajet de déplacement de l'outil (2) depuis le premier magasin à outils jusqu'à la broche (41) étant inférieur au trajet de déplacement de l'outil (2) depuis le second magasin à outils (20) jusqu'à la broche (41).

12. Système selon la revendication 11, **caractérisé en ce qu'**un outil (2) est mis à disposition dans une première position de transfert (P1), une seconde position de transfert (P2) et une position de changement sur la broche (41), de telle sorte que les axes longitudinaux des outils (2) dans ces positions sont orientés en direction horizontale et parallèlement les uns aux autres, la première ou la seconde position de transfert étant cette position de mise à disposition d'outil dans laquelle un outil (2) du premier ou du second magasin à outils (10 ; 20) est transféré au dispositif de transfert.

13. Système selon la revendication 1, **caractérisé en ce que** le premier magasin à outils (10) est agencé plus près de la broche (41) que le second magasin à outils (20) et **en ce qu'**un temps moyen de mise à disposition d'outil du premier magasin à outils (10) est plus court qu'un temps moyen de mise à disposition d'outil du second magasin à outils (20), de telle sort qu'un outil (2) stocké dans le premier magasin à outils (10) peut être enlevé de son emplacement de stockage et être amené à une position prédéterminée de mise à disposition d'outil sur la broche (41) plus rapidement qu'un outil (2) stocké dans le second magasin à outils.

14. Machine-outil (40) pour travailler une pièce à oeuvrer, comportant un dispositif de changement d'outil destiné à changer un outil (2) sur la machine-outil (40), comportant un système de mise à disposition d'outil (2) sur la machine-outil (40) selon l'une des revendications 1 à 13.

15. Procédé pour mettre à disposition des outils (2) sur une machine-outil (40) selon la revendication 14, dans lequel on amène à une machine-outil (40) des outils (2) depuis au moins deux magasins à outils différents (10, 20), comprenant les étapes suivantes :
- la mise à disposition d'une pluralité d'outils (2) dans un premier magasin à outils (20) ; et
- la mise à disposition d'une pluralité d'outils (2) dans au moins un second un magasin à outils (20) ; et
- l'amenée des outils (2) depuis lesdits au moins deux magasins à outils différents (10, 20) jusqu'à la machine-outil (40),
dans lequel un outil (2) stocké dans le second magasin à outils (20) qui est requis sur la machine-outil (40) à un instant prédéterminé de changement d'outil est déplacé par un dispositif de transfert et amené au premier magasin à outils (10) dans d'une première étape avant l'instant prédéterminé de changement d'outil, et il est prélevé dans le premier magasin à outils (10), déplacé et amené à la machine-outil (40) par un moyen d'amenée dans une seconde étape.
